(19) Europäisches Patentamt / European Patent Office / Office européen des brevets

(11) **EP 4 340 407 B1**

(12) **EUROPEAN PATENT SPECIFICATION**

(45) Date of publication and mention
of the grant of the patent:
**11.06.2025 Bulletin 2025/24**

(21) Application number: **22306355.3**

(22) Date of filing: **15.09.2022**

(51) International Patent Classification (IPC):
**H04W 4/40** *(2018.01)* **G05D 1/00** *(2024.01)*
**H04W 24/04** *(2009.01)*

(52) Cooperative Patent Classification (CPC):
**H04W 4/40;** G08G 1/094; G08G 1/22

(54) **METHOD AND SERVER FOR CONFIGURING A SET OF PARAMETERS OF AT LEAST TWO FORMATIONS MOVING IN VICINITY**

VERFAHREN UND SERVER ZUM KONFIGURIEREN EINES PARAMETERSATZES VON MINDESTENS ZWEI SICH IN DER NÄHE BEWEGENDEN FORMATIONEN

PROCÉDÉ ET SERVEUR DE CONFIGURATION D'UN ENSEMBLE DE PARAMÈTRES D'AU MOINS DEUX FORMATIONS SE DÉPLAÇANT À PROXIMITÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.03.2024 Bulletin 2024/12**

(73) Proprietors:
• **Mitsubishi Electric R&D Centre Europe B.V.**
**1119 NS Schiphol Rijk Amsterdam (NL)**
Designated Contracting States:
**FR**
• **MITSUBISHI ELECTRIC CORPORATION**
**Chiyoda-ku**
**Tokyo 100-8310 (JP)**
Designated Contracting States:
**AL AT BE BG CH CY CZ DE DK EE ES FI GB GR HR HU IE IS IT LI LT LU LV MC MK MT NL NO PL PT RO RS SE SI SK SM TR**

(72) Inventors:
• **BOUTTIER, Arnaud**
**35708 RENNES CEDEX 7 (FR)**
• **GUILLET, Julien**
**35708 RENNES CEDEX 7 (FR)**

(74) Representative: **Plasseraud IP**
**104 Rue de Richelieu**
**CS92104**
**75080 Paris Cedex 02 (FR)**

(56) References cited:
**CN-A- 112 947 548**

• **ZHANG YANQI ET AL: "Transmitter-Selection Aided Adaptive Consensus-Based Data Sharing for UAV Swarms", IEEE ACCESS, vol. 7, 26 December 2019 (2019-12-26), pages 182217 - 182224, XP011762955, DOI: 10.1109/ ACCESS.2019.2959397**
• **YUNHE LI YICRANE@GMAIL COM ET AL: "Research on Self-Organizing Behavior-Based UAV Formation Based on Distributed Control", 9TH INTERNATIONAL CONFERENCE ON SOFTWARE DEVELOPMENT AND TECHNOLOGIES FOR ENHANCING ACCESSIBILITY AND FIGHTING INFO-EXCLUSION, ACMPUB27, NEW YORK, NY, USA, 26 August 2019 (2019-08-26), pages 1 - 5, XP058885445, ISBN: 978-1-4503-9018-7, DOI: 10.1145/3387168.3387224**
• **HOFFMANN MARCIN ET AL: "Frequency Selection for Platoon Communications in Secondary Spectrum Using Radio Environment Maps", IEEE TRANSACTIONS ON INTELLIGENT TRANSPORTATION SYSTEMS, IEEE, PISCATAWAY, NJ, USA, vol. 23, no. 3, 24 December 2021 (2021-12-24), pages 2637 - 2650, XP011902484, ISSN: 1524-9050, [retrieved on 20220309], DOI: 10.1109/TITS.2021.3136681**

**Description**

## TECHNICAL FIELD

The present disclosure relates to communication systems and relates more specifically to a method and server for configuring a set of parameters of at least two formations of communicating nodes moving in vicinity to each other.

## BACKGROUND ART

Many applications can benefit from building formations made of multiple vehicles that are required to follow the same overall trajectory while cooperatively maintaining a desired geometrical arrangement between them. Moving in formation has many advantages over non-cooperative systems to reduce the system cost, increase the system robustness and efficiency while providing redundancy, reconfiguration ability and structure flexibility [Chen2005].

Among several others, platooning appears as a very promising application where several vehicles are required to drive at a desired velocity while keeping a specified distance between vehicles (e.g. 1D over one lane). Driving in platoons for cars, trucks, robots, or even planes, can lead to significant benefits in terms of power consumption, passengers' comfort, traffic smoothness, etc. Other kinds of formation applications can be satellite clusters, swarms of drones for security, search and rescue, agriculture, etc.

In order to maintain the geometrical arrangement of a formation, the dynamics of the vehicles in the formation is commonly handled using control algorithms that require the exchange of data between communicating nodes embedded in the vehicles. For instance, platoons usually imply the transmission of the leader vehicle's acceleration and velocity to its followers and the position and velocity of each vehicle to its close neighbors (see e.g. [Sybis2019]). Then e.g. a consensus algorithm may be used to maintain the vehicles at an equal distance from each other.

Owning to their mobility requirements, most of the formation applications rely on wireless links. Communications on wireless links are prone to errors coming from physical layer issues (additive noise, path-loss, shadowing, fast fading, phase noise, etc.) but also from upper layer issues (collisions due to the

hidden-node effect in a Carrier Sensing Multiple Access, CSMA, scheme or distributed scheduling, etc.). Latency also results to some extent from physical layer effects (transmission delay, packet duration, etc.) but mostly from upper layer effects (scheduling policy, random access scheme, etc.).

With control algorithms depending on the exchange of data between communicating nodes, the loss of packets of data is obviously detrimental to their performance. Packets can also be lost resulting from a shortage in the communication resources. Due to the scarceness of radio frequencies, wireless systems are designed to operate over limited bandwidths. Whatever the transmission technology in use, this leads to the availability of only a limited number of communication resources per time unit for the communicating nodes (either at the physical level, or at the logical level where an operator devotes to a specific application only a subset of the overall available resources).

When a single formation of vehicles is moving while using a control algorithm (such as a consensus algorithm) and limited communication resources to maintain a predetermined geometrical arrangement between them (typically 1D with a predetermined distance between them, and a predetermined velocity), it is important to ensure that the control algorithm can actually control the shape of the geometrical arrangement, and/or its velocity, with a sufficient convergence speed. The convergence speed of a control algorithm depends inter alia on the rate of packet losses (see e.g. [Sybis2019]).

However, a formation needs to be able to anticipate modifications of the communication environment which might prevent from achieving a sufficient convergence speed given the geometrical arrangement of the formation.

Such a modification of the communication environment may occur for instance when different formations approach each other and use the same communication resources for exchanging data related to their respective control algorithms. Since the formations move into the radio coverage of each other, the communicating nodes of said formations will compete for accessing the same communication resources, leading to increased mutual interference and increased packet losses. Examples of formations which may move into radio vicinity and compete for the same communication resources include platoons of vehicles crossing or overtaking each other over highways.

CN112947548 A proposes, for a UAV formation, prediction of spectrum holes based on a spectrum map and the corresponding planning formation spectrum and trajectory based on that, but it does not propose actions on the control algorithm to maintain the topology of the formation.

## SUMMARY

The present disclosure aims at improving the situation. In particular, the present disclosure aims at overcoming at least some of the limitations of the prior art discussed above, by proposing a solution for configuring a set of parameters of at least two formations moving in vicinity to each other.

For this purpose, and according to a first aspect, the present disclosure relates to a computer implemented method for configuring values of a set of parameters of at least two moving formations, each formation comprising a plurality of respective communicating nodes, wherein the set of parameters comprises at least one prior parameter, wherein each prior parameter corresponds to a formation parameter for each formation or to a network parameter for the formations, wherein the formation parameter of a formation defines a geometrical arrangement of the communicating nodes of the formation and the network parameter of a formation defines communication resources that are allocated to said formation for exchanging data on wireless links, wherein each prior parameter has a predetermined value, and a predetermined modification of a communication environment of the formations is about to occur. The set of parameters further comprises, for each formation:

- a control parameter of a control algorithm used by the formation to maintain the geometrical arrangement,
- a communication parameter for configuring the wireless links between the communicating nodes of the formation, said wireless links being used for exchanging data related to the control algorithm,

Said configuration method comprises steps of:

- for each prior parameter: obtaining a range of allowed performance values based on the corresponding prior parameter value,
- searching for values of the control parameters and of the communication parameters of the formations which enable achieving an allowed performance value within each range when considering that the modification of the communication environment has occurred,
- if it is not possible to achieve an allowed performance value for each range: searching for updated ranges of allowed performance values for which it is possible to determine values of the control parameters and of the communication parameters which enable achieving an allowed performance value for each updated range when considering that the modification of the communication environment has occurred,
- determining an updated value of the at least one prior parameter based on the values of the control parameters and of the communication parameters which enable achieving an allowed performance value for each updated range of allowed performance values.

Hence the proposed configuration method first considers as input at least one prior parameter. A prior parameter corresponds to a parameter having a value configured before a predetermined modification of the communication environment of the formations is about to occur. For instance, the anticipated modification of the communication environment is due to the fact that the formations are approaching each other and will be in radio vicinity and may compete for the same allocated communication resources. According to another example, the anticipated modification of the communication environment is due to the fact that e.g. at least one of the formations, while moving in radio vicinity with at least one other formation, will experience a predictable degradation of the quality of its wireless links. In the present disclosure, the value of each prior parameter is to be maintained, if possible, when the modification of the communication environment occurs. For instance, it is possible to consider a prior parameter which corresponds to a formation parameter for each formation, which describes the geometrical arrangement (relative positions between the communicating nodes, velocity of the communicating nodes, etc.) of the formation. In such a case, the value of the formation parameter (geometrical arrangement) should be maintained unchanged, if possible. In some cases, it is also possible to consider a prior parameter which corresponds to a network parameter which describes the amount of communication resources allocated to one or more formations. In such a case, the value of the network parameter (amount of allocated communication resources) should be maintained unchanged, if possible.

Ranges of allowed performance values are determined based on the values of the prior parameters. The allowed performance values are basically values of performance indicators which enable the values of the prior parameters to be maintained. Before the modification of the communication environment of the formations occurs (e.g. before the formations are in vicinity to each other), the performance indicators have values in their respective allowed ranges.

Then, before the modification of the communication environment has occurred (or shortly after it has started) but considering that said modification of the communication environment has occurred, the configuration method searches for values of communication parameters (for configuring the wireless links) and values of the control parameters (for configuring the control algorithms of the formations) which enable achieving allowed performance values for each considered range. The search may be performed by e.g. any multi-objective optimization method known to the skilled person.

If such values of the communication parameters and of the control parameters exist, then this means that the anticipated modification of the communication environment does not prevent from maintaining the values of the prior parameters (e.g. maintaining the geometrical configuration).

If such values of the communication parameters and of the control parameters do not exist, then this means that the anticipated modification of the communication environment prevents from maintaining the values of the prior parameters (e.g. maintaining the geometrical configuration).

In the latter case, the configuration method searches for updated ranges of the allowed performance values for which it is possible to determine values of the control parameters and of the communication parameters which enable achieving an allowed performance value for each updated range when considering that the modification of the communication environment has occurred. Hence, the ranges are iteratively updated by modifying (i.e. degrading) at least one of the ranges, until achievable allowed performance values are obtained for each updated range. Modifying a range of allowed performance values means including in the updated range degraded performance values that were not allowed in the original range. Updating a range of allowed performance values may go up to allowing any performance value for the considered performance indicator.

Once achievable allowed performance values are obtained for each updated range, the prior parameters' values are updated based on the values of the control parameters and of the communication parameters which enable achieving an allowed performance value for each updated range. Since constraints (i.e. allowed performance values) on at least one performance indicator have been relaxed (by allowing degraded performance values for at least one range, e.g. by allowing a slower convergence speed for the control algorithms of the formations), the values of one or more prior parameters may need to be modified (for instance by reducing the velocity of the vehicles of the formations and/or by increasing the distance between vehicles).

The updated values of the prior parameters can then be used for configuring the geometrical arrangements of the formations and/or the communication resources allocated to the formations before the modification of the communication environment actually occurs (or at least before the modification of the communication environment is maximal), by e.g. communicating said updated values of the prior parameters to the formations. Alternatively, or in combination thereof, the values of the control parameters and of the communication parameters which have enabled achieving an allowed performance value for each updated range can similarly be used for configuring the control algorithm and the wireless links of the communicating nodes of the formations, by e.g. communicating said values to the communicating nodes of the formations.

In specific embodiments, the configuration method can further comprise one or more of the following features, considered either alone or in any technically possible combination.

In specific embodiments, the range of allowed performance values for a formation parameter corresponds to a range of allowed control performance values for the control algorithm used by said formation and/or the range of allowed performance values for a network parameter corresponds to a range of allowed resource usage performance values for the use of the allocated communication resources by the formations.

In specific embodiments, the set of parameters comprises a plurality of prior parameters which include a formation parameter for each formation and at least one network parameter for all formations and, if it is not possible to find values of the control parameters and values of the communication parameters of the formations which enable achieving an allowed performance value for each range, then searching for updated ranges comprises degrading the allowed control performance values for at least one formation.

In specific embodiments, searching for updated ranges comprises degrading first the allowed control performance values before degrading, if required (i.e. if degrading only the allowed control performance values is not sufficient), the allowed resource usage performance values.

In specific embodiments, the set of parameters comprises a plurality of prior parameters which include a formation parameter for each formation and at least one network parameter for all formations and, if it is not possible to find values of the control parameters and values of the communication parameters of the formations which enable achieving an allowed performance value for each range, then searching for updated ranges comprises degrading the allowed resource usage performance values for the formations.

In specific embodiments, searching for updated ranges comprises degrading first the allowed resource usage performance values before degrading, if required, the allowed control performance values.

In specific embodiments, searching for updated ranges by degrading the allowed control performance values for the formations comprises using a same degradation factor for all or a plurality of the formations.

In specific embodiments, the allowed control performance values for a control algorithm are representative of allowed convergence speed values for said control algorithm.

In specific embodiments, the allowed resource usage performance values are representative of a global interference level generated by all formations when using the allocated communication resources.

In specific embodiments, the formation parameter of each formation is representative of at least one among the following:

- a distance between communicating nodes of the formation,
- a shape of the geometrical arrangement of the formation,
- a velocity of a communicating node of the formation.

In specific embodiments, an allocated communication resource, defined in a network parameter, is any of the following:

- at least one frequency bandwidth,
- at least one spreading or scrambling code,
- at least one temporal pattern.

In specific embodiments, the control parameter of a formation is representative of at least one weighting factor used to weight data received from other communication nodes of said formation.

In specific embodiments, the communication parameter of a formation is representative of at least one among the following:

- a modulation scheme,
- a channel coding scheme,
- a multi-antenna scheme,
- a transmission power,
- a coverage distance,
- a packet rate.

In specific embodiments, the configuration method is carried out by a configuration server included in at least one communicating node of a formation or separate from the formations.

According to a second aspect, the present disclosure relates to a computer program product comprising instructions which, when executed by at least one processor, configure said at least one processor to carry out a configuration method according to any one of the embodiments of the present disclosure.

According to a third aspect, the present disclosure relates to a configuration server comprising at least one processor, at least one memory and at least one communication module, wherein the at least one processor is configured to carry out a configuration method according to any one of the embodiments of the present disclosure.

In specific embodiments, the configuration server is included in at least one communicating node of a formation or separate from the formations.

## BRIEF DESCRIPTION OF DRAWINGS

The invention will be better understood upon reading the following description, given as an example that is in no way limiting, and made in reference to the figures which show:

- Figure 1: a schematic representation of two formations corresponding to separate platoons of vehicles,
- Figure 2: a diagram representing the main steps of a method for configuring a set of parameters of formations,
- Figure 3: a schematic representation of a configuration server,
- Figure 4: a plot illustrating an example of Pareto frontier in a multi-objective optimization problem,
- Figure 5: plots illustrating examples of different selection policies for selecting a point on the Pareto frontier,
- Figure 6: a plot illustrating an example in which the control performance constraint is too stringent,
- Figure 7: a plot illustrating an example in which both the control performance constraint and the resource usage performance constraint are too stringent,
- Figure 8: a plot summarizing the behavior of an example embodiment of the configuring method of figure 2.

In these figures, references identical from one figure to another designate identical or analogous elements. For reasons of clarity, the elements shown are not to scale, unless explicitly stated otherwise.

Also, the order of steps represented in these figures is provided only for illustration purposes and is not meant to limit the present disclosure which may be applied with the same steps executed in a different order.

## DESCRIPTION OF EMBODIMENTS

As discussed above, the present disclosure relates to the interaction of at least two moving formations sharing for some time at least allocated communication resources that are common to said at least two moving formations. In particular, a modification of a communication environment of the formations is anticipated to occur.

For instance, the anticipated modification of the communication environment is due to the fact that the formations are getting closer to each other and will be in radio vicinity (e.g. at least one communicating node of one formation is in the radio coverage of at least one communicating node of the other formation) and compete for the common allocated communication resources. Hence, in such a case, the formations do not initially compete for the common allocated communication resources (since they are not in radio vicinity to each other) but they are getting closer to each other such they will soon be in radio vicinity and compete for the common allocated same communication resources.

According to another example, the anticipated modification of the communication environment is due to the fact that e.g. at least one of the formations, while moving in radio vicinity with at least one other formation, will experience a predictable degradation of the quality of its wireless links.

In the sequel, we consider in a non-limitative manner that the modification of the communication environment corresponds to the fact that the formations are getting closer to each other and will be in radio vicinity and compete for the common allocated communication resources.

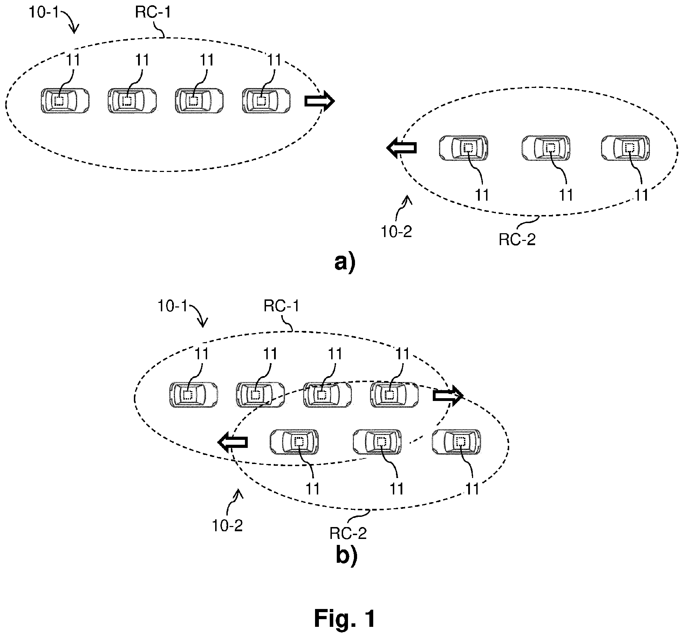

Figure 1 represents schematically an example of such a modification of the communication environment in the case of a first formation 10-1 and a second formation 10-2 which correspond to two platoons of vehicles crossing. In the formation 10-1, each vehicle is equipped with a communicating node 11 configured to exchange data with other communicating nodes 11 of the formation 10-1 in relation with a control algorithm used by the formation 10-1 to maintain a geometrical arrangement (e.g. relative positions and velocity of the communicating nodes) of said formation 10-1. Similarly, each of the vehicles of the formation 10-2 is equipped with a communicating node 11 configured to exchange data with other communicating nodes 11 of the formation 10-2 in relation with a control algorithm used by the formation 10-2 to maintain a geometrical arrangement of said formation 10-2.

In the sequel, the formations are collectively referred to by 10 when they do not need to be distinguished and are individually referred to by 10-i when they need to be distinguished, wherein the formation 10-i corresponds to the formation 10 of index $i$, with $1 \le i \le N$ and $N$ corresponds to the number of formations moving in vicinity. In the sequel, we will mainly focus on the case where $N = 2$ (i.e. two formations). However, the present disclosure may also be applied with a number of formations 10 greater than 2.

In figure 1, the radio coverage of the formation 10-1 is denoted by RC-1, and the radio coverage of the formation 10-2 is denoted by RC-2. The radio coverage of a formation 10 corresponds to an area in which it is possible to receive and decode a message transmitted by at least one communicating node 11 of the formation with a given packet delivery rate, PDR. In part a) of figure 1, the formations 10-1 and 10-2 are approaching to each other but are initially spaced apart such that their respective radio coverages RC-1 and RC-2 do not overlap. Hence, communicating nodes 11 from different formations 10 do not compete for the common allocated communication resources. In part b) of figure 1, the formations 10-1 and 10-2 are in vicinity such that their respective radio coverages RC-1 and RC-2 overlap. Hence, the communicating nodes 11 from different formations compete for the common allocated communication resources, such that e.g. each formation 10 may experience an increased level of packet collisions.

As discussed above, each formation 10 uses a control algorithm to control the geometrical arrangement of the formation, preferably a cooperative control algorithm such as the consensus algorithm or the distributed model predictive control, DMPC, algorithm. The communicating nodes 11 of a formation 10 exchange data to enable the cooperative control algorithm to control the geometrical arrangement. For a platoon of vehicles, the control algorithm is used to maintain a predetermined geometrical arrangement between the vehicles while moving (typically 1D with a predetermined distance between them, and a predetermined velocity). It is important to ensure that the control algorithm can actually control the geometrical arrangement with a sufficient convergence speed to avoid e.g. collisions between vehicles. Also, the convergence speed of a control algorithm depends inter alia on packet losses (see e.g. [Sybis2019]). Hence, when the radio coverages RC-1 and RC-2 of the formations 10-1 and 10-2 overlap, as in the lower part of figure 1, the convergence speed of the control algorithms may become insufficient due to the increased level of mutual interferences (wherein the mutual interference level for a formation corresponds to the level of interference generated by the other formations).

The present disclosure relates to a configuration method 20 for configuring a set of parameters of the formations 10 in response to an anticipated modification of the communication environment of the formations 10. The formations 10 typically have the parameters in the set configured with predetermined values before the communication environment modification.

Some of the parameters of the set are referred to as "prior parameters" and correspond to parameters for which the values should be maintained during the communication environment modification, when possible. The set includes at least one prior parameter.

Two main types of prior parameters are possible.

A first possible type of prior parameter is a formation parameter which describes a geometrical arrangement of a formation 10. Any formation parameter suitable for describing the geometrical arrangement of a formation 10 may be used in the present disclosure. For instance, the formation parameter of a formation 10 may include at least one among the following characteristics of the geometrical arrangement of the formation 10:

- a distance between communicating nodes 11 of the formation 10 (inter-vehicle distance or IVD),
- a shape of the geometrical arrangement of the formation 10 (e.g. linear, square, etc.),

- a velocity (e.g. maximum, minimum or nominal velocity) of a communicating node 11 of the formation 10.

When the prior parameters include formation parameters, then the prior parameters comprise $N$ formation parameters, one per formation 10. If the prior parameters include formation parameters, then this implies that the geometrical arrangement of the formations 10 should remain unchanged, if possible, during the communication environment modification.

A second possible type of prior parameter is a network parameter which describes the communication resources that are allocated to a formation for exchanging data on wireless links, which includes communication resources which are also allocated (i.e. common) to at least one of the other formations 10. A network parameter may use any format suitable for describing the communication resources which are allocated to a formation. For instance, an allocated communication resource, defined in a network parameter may be any of the following:

- at least one frequency bandwidth (e.g. a frequency channel or one or more subchannels, one or more subcarriers in an orthogonal frequency division multiple access, OFDMA, system, etc.),
- at least one spreading or scrambling code (i.e. in a code division multiple access, CDMA, system),
- at least one temporal pattern (e.g. one or more slots, etc.).

For instance, it is possible to define beforehand a pool of communication resources (a.k.a. resource pool in the context of 5G cellular networks) that are available for being allocated to the formations 10, and the network parameter of a formation defines a subset of the pool, which is initially allocated to said formation, before the communication environment modification occurs. It is assumed that at least some of the allocated communication resources are common to two or more formations 10, i.e. they are simultaneously allocated to two or more formations 10. In the present disclosure, it is possible to define one network parameter per formation 10, each network parameter defining the communication resources (among the pool of available communication resources) allocated to a respective formation 10 (shared at least in part with at least one other formation 10). However, it is also possible to consider fewer network parameters. For instance, if all formations 10 are allocated the same communication resources, then it is possible to consider a single network parameter (which may be referred to as "global" in the sequel) for all formations 10. If the prior parameters include at least one network parameter, then this implies that the amount of communication resources allocated to the formations 10 should remain unchanged, if possible, during the communication environment modification.

In the following, we consider in a non-limitative manner that a single (global) network parameter is used, such that the at least one prior parameter includes at most one (global) network parameter.

It should be noted that, in the present disclosure, the expression "parameter" can refer to either a single elementary (scalar) parameter, or a vector or matrix parameter including a plurality of elementary parameters. In other words, a parameter includes one or more elementary parameters which may be of different types. For instance, a formation parameter can include both an IVD and a velocity. A network parameter can include e.g. both one or more frequency bandwidths and one or more temporal patterns.

The values of the other parameters (i.e. other than the prior parameters) of the set are to be reconfigured first when adapting to the communication environment modification. The other parameters correspond to parameters which influence the convergence speed of the control algorithms used by the formations 10 and include, for each formation 10:

- a control parameter of a control algorithm used by the formation 10 to control the geometrical arrangement,
- a communication parameter for configuring the wireless links between the communicating nodes 11 of the formation 10, used for exchanging data related to the control algorithm.

For instance, in a control algorithm such as e.g. the consensus algorithm, each communicating node 11 uses control parameters which correspond to one or more weighting factors used to weight the data received from neighbor communicating nodes 11. Such weighting factors influence the convergence speed of the control algorithm and can be adjusted when adapting to the communication environment change. For instance, a continuous-time consensus algorithm can be summarized as:

$$\dot{x}_i(t) = -\sum_{j \in \Theta_i(t)} \alpha_{ij}(t) \left( x_i(t) - x_j(t) \right)$$

wherein $\Theta_i$ represents the set of communicating nodes 11 whose control information $x_j$ is available to the communicating node $i$ at time $t$ and $\alpha_{ij}$ denotes a weighting factor. In this non-limitative example, the convergence speed may be modified by modifying the weighting factors $\alpha_{ij}$. In a control algorithm such as e.g. a DMPC algorithm, the control parameters may correspond to the prediction horizon, the control horizon, etc.

7

Similarly, the configuration of the wireless links influences the communication performance, i.e. the properties of the sets $\Theta_i(t)$ (for instance in terms of PDR, etc.) on these wireless links, which influences the convergence speed of the control algorithms. Hence, the configuration of the wireless links can be adjusted when adapting to the communication environment change, by modifying the values of the communications parameters. Non-limitative examples of elementary communication parameters include:

- a modulation scheme (e.g. BPSK, QPSK, 16QAM, etc.),
- a channel coding scheme (e.g. type of channel coder, rate of the channel coder, etc.; the modulation and channel coding scheme are usually collectively referred to as MCS),
- a multi-antenna scheme (e.g. number of layers, number of antennas, etc.),
- a transmission power,
- a coverage distance,
- a packet rate (e.g. number of packets per second),
- a maximum number of retransmissions, etc.

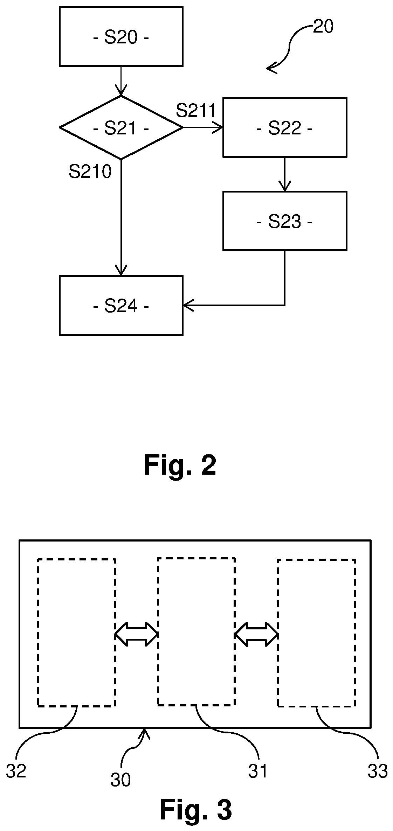

Figure 2 represents schematically the main steps of a configuration method 20 for configuring the set of parameters of the formations in response to an anticipated communication environment modification.

The configuration method 20 is carried out by a configuration server 30.

Figure 3 represents schematically an exemplary embodiment of a configuration server 30 suitable for carrying out the configuration method 20.

As illustrated by figure 3, the configuration server 30 comprises one or more processors 31 and one or more memories 32. The one or more processors 31 may include for instance a central processing unit (CPU), a digital signal processor (DSP), a field-programmable gate array (FPGA), an application specific integrated circuit (ASIC), etc. The one or more memories 32 may include any type of computer readable volatile and non-volatile memories (magnetic hard disk, solid-state disk, optical disk, electronic memory, etc.). The one or more memories 32 may store a computer program product, in the form of a set of program-code instructions to be executed by the one or more processors 31 in order to implement all or part of the steps of the configuring method 20.

As illustrated by figure 3, the configuration server 30 comprises also a communication module 33 for exchanging data with the formations 10.

In some cases, the configuration server 30 may be separated from the communicating nodes 11 of the formations 10. For instance, if the data is exchanged directly with the formations 10, the communication module 33 implements at least one wireless communication protocol. If the data is exchanged indirectly with the formations 10, i.e. via one or more intermediate communicating devices, the communication module 33 may implement at least one wireless communication protocol and/or at least one wired communication protocol to exchange data with the intermediate communicating devices. It should be noted that the configuration server 30 may be included in a single hardware device or in a plurality of separate hardware devices in a distributed computing architecture.

In some cases, the configuration server 30 may alternatively be included in one or more (in a distributed computing architecture) communicating nodes 11 of a same formation 10. In such a case, the communication module 33 implements at least one wireless communication protocol, for instance the same wireless communication protocol used by the communicating nodes 11 of the formation 10 for exchanging data related to the control algorithm. If the communication module 33 implements the same wireless communication protocol used by the communicating nodes 11, then the communication module 33 may also be used by a communication module 11 for exchanging data related to the control algorithm with other communicating nodes 11 (i.e. the communicating device 11 may comprise a single communication module). Also, the configuration server 30 is configured to exchange data with at least one communicating node 11 of each other formation 10, directly and/or indirectly via one or more other communicating nodes 11 and/or one or more intermediate communicating devices separated from the formations 10.

Hence, the configuration server 30 exchanges data with the formations 10. The data received from the formations 10 is any data required for performing the configuration method 20. For instance, the data received may include the current values of the prior parameters (before the communication environment modification occurs), the positions and velocities of the formations 10 (e.g. to determine when the communication environment modification will occur), etc. If the configuration server 30 is included in one or more communicating nodes 11 of a formation, this implies that each formation 10 can exchange data with any other formation, directly or indirectly, temporarily or permanently. Depending on the nature of the inter-formation communication, the formations 10 can anticipate with more or less time in advance the future communication environment modification. The data transmitted by the configuration server 30 to the formations include new values for the prior parameters if they cannot remain unchanged. The data transmitted by the configuration server 30 to the formations may also include new values for the control parameters and/or for the communication parameters.

As illustrated by figure 2, the configuration method 20 comprises a step S20 of determining, for each prior parameter, a range of allowed performance values based on the corresponding prior parameter value.

Basically, the allowed performance values are values of performance indicators which enable the values of the prior parameters, configured before the communication environment modification, to be maintained during communication environment modification.

For instance, the performance indicator for a formation parameter of a formation 10 may be any control performance indicator representative of the performance of the control algorithm used by this formation 10. In preferred embodiments, the control performance indicator is representative of the convergence speed of said control algorithm, and the faster the convergence speed value the higher the control performance value.

For instance, the performance indicator for the network parameter of all formations 10 may be any resource usage performance indicator representative of the performance of the usage of the allocated communication resources by the communicating nodes 11 of all formations 10. In preferred embodiments, the resource usage performance indicator is representative of a global interference level generated by all formations 10 when using the allocated communication resources. The global interference level corresponds to the interference level collectively generated by all formations 10 in the area where the formations 10 are located, and the lower the global interference level the higher the resource usage performance value. In the sequel, reference may be made in some cases to a resource usage cost. Basically, the resource usage cost is such that the higher the resource usage cost value the lower the resource usage performance value (and the higher the global interference level). For instance, the resource usage performance may be opposed to or inversely proportional to the resource usage cost, such that a resource usage cost is equally representative of the global interference level generated and can be expressed as a resource usage performance by considering its opposite or its inverse. For instance, the resource usage cost may correspond to a channel busy ratio, CBR, as defined in 3GPP systems, which is representative of the global interference level generated by the formations 10. Other examples include e.g. a system load, SL, a mean received power, etc.

In the sequel, the values of the formation parameters, before the communication environment modification, are referred to as $p^i_{form,t}$ for their respective formation parameters $p^i_{form}$ , with $1 \leq i \leq N$.

For a formation parameter, the range of allowed control performance values may be defined by a lower bound $u^i_{ctrl,t}$ on their respective control performance indicator $u^i_{ctrl}$ (e.g. convergence speed). In order to determine the range of allowed control performance values, a function $\theta^i_{form}$ may be predetermined, such that:

$$\theta^i_{form} : p_{form} \longmapsto u_{ctrl} \ such \ that \ u^i_{ctrl,t} = \theta^i_{form}\left(p^i_{form,t}\right), i = 1 \dots N$$

The function $\theta^i_{form}$ is assumed to be monotonously varying.

For instance, the function $\theta^i_{form}$ may provide the slowest convergence speed which theoretically ensures that the geometrical arrangement is controlled fast enough to prevent a collision between adjacent vehicles of the formation. For instance, the convergence speed may be such that the probability that the IVD becomes null, given the velocity of the vehicles, is lower than a predetermined threshold (e.g. $10^{-6}$ or lower).

Also, it is assumed that a function $\breve{\theta}^i_{form}$ may be predetermined which, given a value $u^i_{ctrl,a}$ on the control performance, determines a value $p^i_{form,a}$ of the formation parameter $p^i_{form}$ :

$$\breve{\theta}^i_{form} : u_{ctrl} \longmapsto p_{form} \ such \ that \ p^i_{form,a} = \breve{\theta}^i_{form}\left(u^i_{ctrl,a}\right), i = 1 \dots N$$

The function $\breve{\theta}^i_{form}$ is assumed to be monotonously varying.

If the prior parameters include a network parameter, then the value of the network parameter $p_{net}$, before the communication environment modification, is referred to as $p_{net,t}$

For the (global) network parameter, the range of allowed resource usage performance values may be defined by an upper bound $c_{com,t}$ on the resource usage cost $c_{com}$ (e.g. CBR). In order to determine the range of allowed control performance values, a function $\theta_{net}$ may be predetermined, such that:

$$\theta_{net} : p_{net} \longmapsto c_{com} \ such \ that \ c_{com,t} = \theta_{net}\left(p_{net,t}\right)$$

Also, it is assumed that a function $\breve{\theta}_{net}$ may be predetermined which, given a value $c_{com,a}$ on the resource usage cost, determines a value $p_{net,a}$ of the network parameter $p_{net}$:

$$\breve{\theta}_{net} \colon c_{com} \longmapsto p_{net} \; such \; that \; p_{net,a} = \breve{\theta}_{net}\big(c_{com,a}\big)$$

Hence, the step S20 of obtaining a range of allowed performance values for each prior parameter may consist in:

- determining a lower bound $u^i_{ctrl,t}$ on the control performance $u^i_{ctrl}$ for each formation parameter $p^i_{form}$, based on the prior value $p^i_{form,t}$ of said formation parameter $p^i_{form}$, by using the function $\theta^i_{form}$; and/or
- determining an upper bound $c_{com,t}$ on the resource usage cost $c_{com}$ for the network parameter $p_{net}$, based on the prior value $p_{net,t}$ of said formation parameter $p_{net}$, by using the function $\theta_{net}$.

As illustrated by figure 2, the configuration method 20 comprises a step S21 of searching for values of the control parameters and of the communication parameters of the formations 10 which enable achieving an allowed performance value for each range when considering that the modification of the communication environment has occurred.

As previously explained, the performance of the control algorithms depends on the communication performance on the wireless links. For instance, the convergence speed of the consensus algorithm is related to the spectral radius of a matrix which is populated by PDR values of the different links between agents and to at least one control parameter [Pereira2011] (see also the patent application EP 21305452.1).

For each formation 10, we denote by $x^i_{com}$ (MCS, transmission power, packet rate, etc.) the communication parameter that can be configured to adjust the communication performance on the wireless links. We assume in a non-limitative manner that all communicating nodes 11 of a same formation 10 use the same values of the communication parameter $x^i_{com}$. For each formation 10, we denote by $x^i_{ctrl}$ the control parameter that can be configured to adjust the control performance of the control algorithm.

Hence, for each formation 10, the values of $x^i_{com}$ and/or $x^i_{ctrl}$ may be optimized to try and maintain unchanged the prior value of each prior parameter (i.e. values $p^i_{form,t}$ of the formation parameters $p^i_{form}$ and/or value $p_{net,t}$ of the network parameter $p_{net}$). Since the prior value of each prior parameter can remain unchanged if it is possible to achieve performance values in their respective ranges of allowed performance values then, assuming control performance indicators and a resource usage performance indicator, this implies that this optimization is carried out subject to:

- $u^i_{ctrl} \geq u^i_{ctrl,t}$, i.e. the values of the control parameters and of the communication parameters enable to achieve a control performance value in the allowed range,
- $c_{com} \leq c_{com,t}$ (i.e. $-c_{com} \geq -c_{com,t}$ wherein $-c_{com}$ corresponds to the resource usage performance), i.e. the values of the control parameters and of the communication parameters enable to achieve a resource usage performance value in the allowed range.

As illustrated by figure 2, if it is possible to find values $\hat{x}^i_{com}$ of $x^i_{com}$ and values $\hat{x}^i_{ctrl}$ of $x^i_{ctrl}$ which enable achieving an allowed performance value for each range without modifying the prior value of each prior parameter (reference S210 in figure 2), then each control parameter $x^i_{ctrl}$ may be configured with the corresponding value $\hat{x}^i_{ctrl}$ and each communication parameter $x^i_{com}$ may be configured with the corresponding value $\hat{x}^i_{com}$.

In turn, if it is not possible to find values $\hat{x}^i_{com}$ of $x^i_{com}$ and values $\hat{x}^i_{ctrl}$ of $x^i_{ctrl}$ which enable achieving an allowed performance value for each range without modifying the prior value of each prior parameter (reference S211 in figure 2), then the configuration method 20 comprises a step S22 of searching for updated ranges of allowed performance values for which it is possible to determine values of the control parameters $x^i_{ctrl}$ and of the communication parameters

$x_{com}^i$ which enable achieving an allowed performance value for each updated range, when considering that the modification of the communication environment has occurred. During the step S22, at least one range of allowed performance values is modified to try and find values of the control parameters $x_{ctrl}^i$ and/or of the communication parameters $x_{com}^i$ which enable achieving allowed performance values for each range. Modifying a range of allowed performance values means including in the updated range degraded performance values that were not allowed in the original range. It is possible to modify first a single range and modify iteratively other ranges only if it was not possible to find values of the control parameters $x_{ctrl}^i$ and of the communication parameters $x_{com}^i$ which enable achieving allowed performance values for each range. By doing so the performance indicators of the ranges modified last are prioritized with respect to performance indicators of the ranges modified first. In other examples, it is also possible to modify simultaneously a plurality or all ranges, etc.

When such values of the control parameters $x_{ctrl}^i$ and of the communication parameters $x_{com}^i$ are found, then the configuration method 20 comprises a step S23 of updating the value of each prior parameter for which the range of allowed performance values has been modified during step S22. It should be noted that, in the present disclosure, all ranges obtained after step S22 are referred to as "updated ranges", however the updated ranges are not necessarily all modified with respect to the original ranges and it may be sufficient in some cases to modify only one range of allowed performance values, or one type of ranges of allowed performance values (for instance only ranges corresponding to control performance values or only ranges corresponding to resource usage performance values).

During step S23, the value of at least one prior parameter is updated based on the values $\hat{x}_{ctrl}^i$ and $\hat{x}_{com}^i$ of the control parameters and of the communication parameters which have enabled achieving an allowed performance value for each updated range. More specifically, the performance value obtained in an updated (and modified) range (which depends on the values $\hat{x}_{ctrl}^i$ and $\hat{x}_{com}^i$ of the control parameters and of the communication parameters) is used to update the value of the corresponding prior parameter, by using either the function $\breve{\theta}_{net}$ or the corresponding function $\breve{\theta}_{form}^i$. Hence, if a performance value was obtained outside the original range of allowed performance values, the value of the associated prior parameter may need to be updated accordingly.

In figure 2, the configuration method 20 comprises a step S24 in which the configuration server 30 configures the formations 10 with the values determined for the set of parameters, by distributing the determined values to the formations 10. This configuration step S24 is executed before the communication environment modification starts, or at least before said modification is maximum.

We now provide detailed examples of the different steps of the configuration method 20. While the configuration method 20 is preferably used for configuring a set of parameters of two or more formations 10 moving in vicinity, the explanations are initially provided by assuming a single formation 10, which is more convenient for introducing some concepts and notations.

Single formation case

Searching for values of the control parameter $x_{ctrl}^i$ and of the communication parameter $x_{com}^i$ may be seen as optimizing the control parameter $x_{ctrl}^i$ and the communication parameter $x_{com}^i$ to maximize the control performance $u_{ctrl}^i$ while minimizing the resource usage cost $c_{com}$ (i.e. while maximizing the resource usage performance $-c_{com}$):

$$\left(\hat{x}_{com}^i, \hat{x}_{ctrl}^i\right) = \arg \max_{x_{ctrl}^i, x_{com}^i \in \mathbb{X}} \left(u_{ctrl}^i, -c_{com}\right)$$

However, the two performance indicators $u_{ctrl}^i\left(x_{ctrl}^i, x_{com}^i\right)$ and $c_{com}\left(x_{com}^i\right)$ are interdependent (e.g. allocating more communication resources shall most of the time lead to better control performance), and there exists no unique optimal solution to this problem as stated.

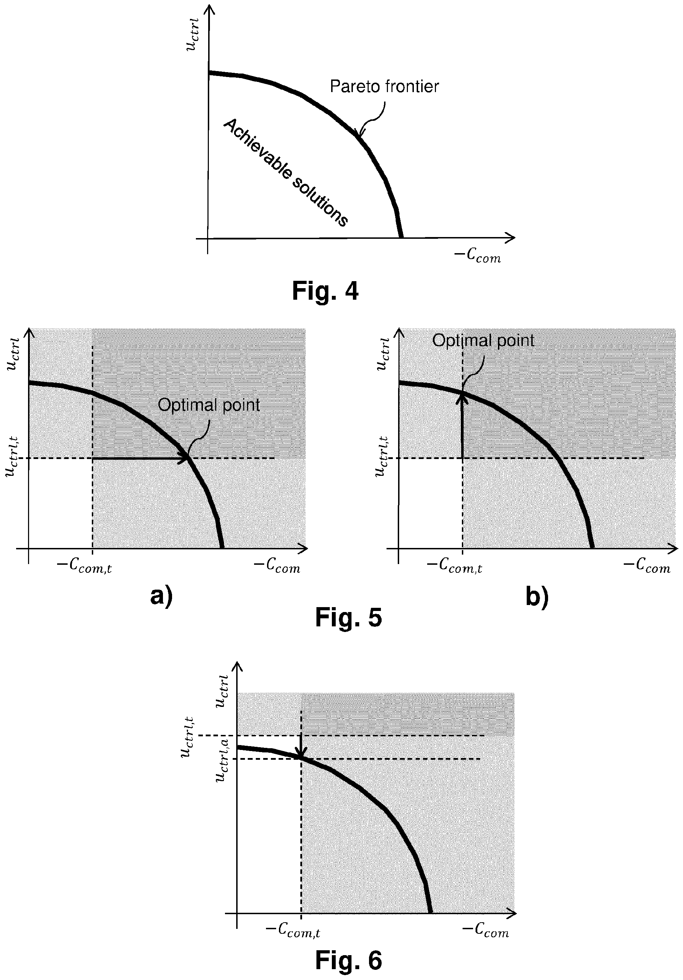

Hence, we are dealing here with a multi-objective optimization. In the context of multi-objective optimization, it is common to look for the Pareto frontier (or Pareto front) that corresponds to all the points ( $u^i_{ctrl}$ , $-c_{com}$) such that improving one performance indicator (here $u^i_{ctrl}$ or $-c_{com}$) by modifying one variable will necessarily degrade the other performance indicator (see figure 4).

The communication parameter $x^i_{com}$ may lie on a support that is bounded (e.g. maximum transmit power) and/or discrete (e.g. MCS, packet rate). The same may hold also for the control parameter $x^i_{ctrl}$ , and the optimization is performed over the so-called decision (variable) space $\mathbb{X}$.

Dealing with multi-objective optimization, it is therefore required to define a criterion to select a unique "optimal" point, if any, among those of the Pareto frontier. In the sequel, the criterion for selecting a point on the Pareto frontier is referred to as "selection policy".

For instance, the selection policy may consist in searching for the solution which minimizes the resource usage cost $c_{com}$:

$$\left(\hat{x}^i_{com}, \hat{x}^i_{ctrl}\right) = \arg \min_{x^i_{ctrl}, x^i_{com} \in \mathbb{X}} \left(c_{com}\right) s.t. u^i_{ctrl} \geq u^i_{ctrl,t}, c_{com} \leq c_{com,t}$$

It should be noted that minimizing the resource usage cost $c_{com}$ under an equality constraint on the control performance $u^i_{ctrl}$ would not necessarily lead to a solution on the Pareto frontier. It is thus better to stick to the inequality. In the above expression, the optimization aims at minimizing the resource usage cost while ensuring an allowed control performance value. In other words, this selection policy prioritizes the minimization of the resource usage cost (hereinafter "communication-first selection policy"). This approach is illustrated in part a) of figure 5.

Another approach could be to set the priority on maximizing the control performance while ensuring an allowed resource usage cost value (hereinafter "control-first selection policy"):

$$\left(\hat{x}^i_{com}, \hat{x}^i_{ctrl}\right) = \arg \max_{x^i_{ctrl}, x^i_{com} \in \mathbb{X}} \left(u^i_{ctrl}\right) s.t. u^i_{ctrl} \geq u^i_{ctrl,t}, c_{com} \leq c_{com,t}$$

The control-first selection policy approach is illustrated in part b) of figure 5. Between the optimal points represented in part a) of figure 5 (communication-first selection policy) and in part b) of figure 5 (control-first selection policy), there exist other optimal solutions on the Pareto frontier which may be obtained by considering other selection policies.

At first, we assume that the segment on the Pareto frontier is not empty. The selection of a single point on the Pareto frontier can be performed as follows:

$$\left(\hat{x}^i_{com}, \hat{x}^i_{ctrl}\right) = \arg \max_{x^i_{ctrl}, x^i_{com} \in \Omega_\uparrow} \left(\tilde{f}_\uparrow\left(u^i_{ctrl}, -c_{com}\right)\right)$$

$$\Omega_\uparrow = \left\{ x^i_{ctrl}, x^i_{com} \in \mathbb{X} \mid u^i_{ctrl} \geq u^i_{ctrl,t}, c_{com} \leq c_{com,t} \right\}$$

wherein $\tilde{f}_\uparrow(.)$ is a scalar function defined to implement the selection policy, i.e. to select one unique solution among those on the Pareto frontier, if any. Generally speaking, the selection of a single solution onto the Pareto frontier can be obtained through the scalar function of the different criteria (here $u^i_{ctrl}$ and $c_{com}$), leading to a standard optimization problem. We will focus on this specific case without losing in generality. Possible solutions are the Weighted Sum or Tchebycheff approaches [Zhang2007]. The Weighted Sum is well suited here with only two terms to be combined as

$$\left(\hat{x}^i_{com}, \hat{x}^i_{ctrl}\right) = \arg \max_{x^i_{ctrl}, x^i_{com} \in \Omega_\uparrow} \left((1-\lambda)u^i_{ctrl} - \lambda c_{com}\right), \lambda \in [0,1]$$

$$\Omega_\uparrow = \left\{ x^i_{ctrl}, x^i_{com} \in \mathbb{X} \mid u^i_{ctrl} \geq u^i_{ctrl,t}, c_{com} \leq c_{com,t} \right\}$$

By simply setting the parameter $\lambda = 1$, we get the communication-first selection policy and, when $\lambda = 0$, we get the control-first selection policy. For any in-between value, we achieve another tradeoff between the two constraints.

It may occur that e.g. the constraint $u^i_{ctrl} \geq u^i_{ctrl,t}$ cannot be achieved (reference S211 in figure 2), as illustrated by figure 6, due to the communication environment modification (which introduces transmission impairments). In such a case, one possibility is to allow the prior value of the formation parameter to be modified. This can be achieved by maximizing the control performance under an unchanged resource usage cost constraint $c_{com,t}$:

$$\left(\hat{x}^i_{com}, \hat{x}^i_{ctrl}\right) = \arg\max_{x^i_{ctrl}, x^i_{com} \in \mathbb{X}} \left(u^i_{ctrl}\right) s.t. c_{com} \leq c_{com,t}$$

This corresponds to updating the range of allowed control performance values, by basically allowing any control performance value given the communication cost constraint. Then the value of the formation parameter is derived from the values $\hat{x}^i_{com}$ and $\hat{x}^i_{ctrl}$ which have enabled achieving allowed performance values in the updated ranges $c_{com} \leq c_{com,t}$ (not modified during step S22) and $u^i_{ctrl} > 0$ (modified during step S22):

$$u^i_{ctrl,a} = u^i_{ctrl}(\hat{x}^i_{com}, \hat{x}^i_{ctrl})$$

$$p^i_{form,a} = \breve{\theta}^i_{form}\left(u^i_{ctrl,a}\right)$$

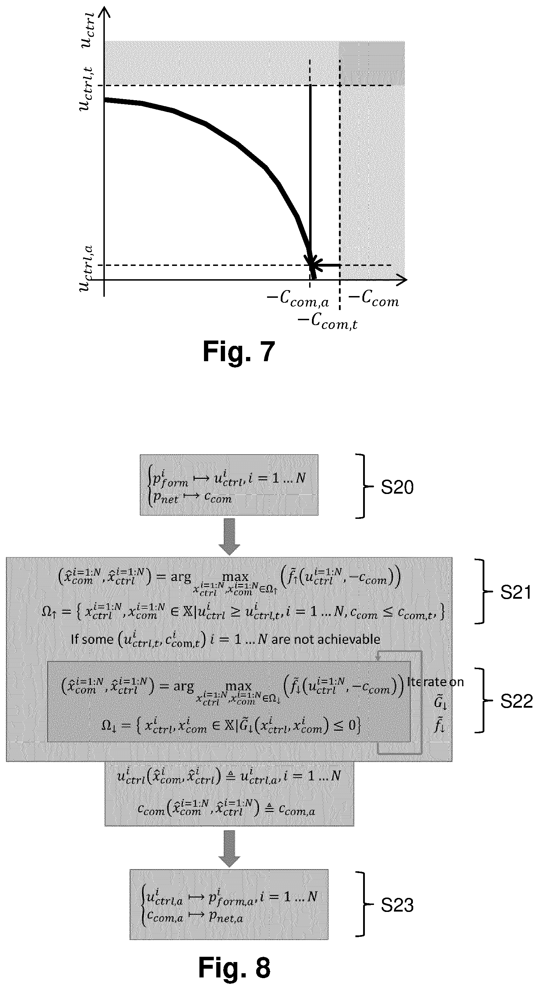

Figure 7 shows another example in which no solution exists because the resource usage cost constraint $c_{com,t}$ is too stringent. In this example, relaxing the constraint $u^i_{ctrl,t}$ on the control performance is not enough. The only solution is to also relax the constraint $c_{com,t}$ on the resource usage cost. Dealing with the communication-first selection policy, a solution is then to also decrease the resource usage cost constraint in order to reach the first non-zero control performance value:

$$\left(\hat{x}^i_{com}, \hat{x}^i_{ctrl}\right) = \arg\min_{x^i_{ctrl}, x^i_{com} \in \mathbb{X}} \left(c_{com}\right) s.t. u^i_{ctrl} > 0$$

This corresponds to updating both the range of allowed control performance values and the range of allowed resource usage cost values, by basically allowing any control performance value and any resource usage cost value in this example. In the example of figure 7, the solution ( $\hat{x}^i_{com}, \hat{x}^i_{ctrl}$ ) is achieved for performance values which are all outside the original ranges of allowed performance values. The values of the formation parameter and of the network parameter are derived from the values $\hat{x}^i_{com}$ and $\hat{x}^i_{ctrl}$ which have enabled achieving allowed performance values in the updated ranges $c_{com} \leq \infty$ (modified during step S22) and $u^i_{ctrl} \geq 0$ (modified during step S22):

$$u^i_{ctrl,a} = u^i_{ctrl}(\hat{x}^i_{com}, \hat{x}^i_{ctrl})$$

$$p^i_{form,a} = \breve{\theta}^i_{form}\left(u^i_{ctrl,a}\right)$$

$$c_{com,a} = c_{com}(\hat{x}^i_{com})$$

$$p_{net,a} = \breve{\theta}_{net}\left(c_{com,a}\right)$$

More generally, when it is not possible to find values of the control and communication parameters which enable achieving performance values in the original ranges of allowed performance values, four main situations are possible:

- the control performance constraint $u^i_{ctrl,t}$ cannot be achieved but the resource usage cost constraint $c_{com,t}$ can,

- the resource usage cost constraint $c_{com,t}$ cannot be achieved but the control performance constraint $u^i_{ctrl,t}$ can,

- none of the resource usage cost constraint $c_{com,t}$ and the control performance constraint $u^i_{ctrl,t}$ can be achieved,

- both the resource usage cost constraint $c_{com,t}$ and the control performance constraint $u^i_{ctrl,t}$ can be achieved, but not simultaneously. Hence, during step S22, it is required to either reduce the control performance constraint $u^i_{ctrl,t}$ or to increase the resource usage cost constraint $c_{com,t}$, or both, according to a predetermined criterion. In the sequel, the criterion applied for selectively degrading the ranges of allowed performance values is referred to as "prioritization policy". For instance, for a communication-first prioritization policy, the range of allowed control performance values is modified (degraded) first. For a control-first prioritization policy, the range of allowed resource usage performance values is modified (degraded) first.

This can be generalized as:

$$\left(\hat{x}^i_{com}, \hat{x}^i_{ctrl}\right) = \arg \max_{x^i_{ctrl}, x^i_{com} \in \Omega_\downarrow} \left(\tilde{f}_\downarrow\left(u^i_{ctrl}, -c^i_{com}\right)\right)$$

$$\Omega_\downarrow = \left\{ x^i_{ctrl}, x^i_{com} \in \mathbb{X} \mid \tilde{G}_\downarrow\left(x^i_{ctrl}, x^i_{com}\right) \leq 0 \right\}$$

wherein $\tilde{f}_\downarrow(.)$ is a scalar function used to implement the selection policy (which may be different from $\tilde{f}_\uparrow$) when at least one range of allowed performance values is modified (degraded), and $G_\downarrow(.)$ defines how the ranges of allowed performance values are updated during step S22.

General multi-objective problem

The general multi-objective problem can be expressed as:

$$(\hat{x}) = \arg \max_{x \in \Omega \subset \mathbb{X}} \left(F(x)\right)$$

wherein $F(x) = (f_1(x), \cdots, f_m(x))$ is the objective function, $F: \mathbb{X} \to \mathbb{R}^m$ (multi-objective optimization if m > 1) and $x$, the decision variable, is a vector of $n$ elements with value in $\mathbb{X}$, i.e. the decision space. $\mathbb{X}$, is the set of decision variables and $\Omega$ is the set with constraints and is included in the set $\mathbb{X}$.

Since $F(x)$ is a vector of dimension at least two (m > 1), we do not have a total order relation, i.e. we do not have a higher (or equal) value for all pairs of vectors $F(x)$. We have to define what we mean as $\max(F(x))$ when $F(x)$ is a vector and we consider the Pareto sense for this maximum. A maximum of such a vector function is such that it is not possible to increase one of the components without decreasing another component if a special vector is considered as a maximum. In this sense, we have generally many solutions: the set $\{\hat{x}\}$ of such solutions is what we call the Pareto frontier. With the Pareto frontier defined by $\mathbb{P}$, the resulting $\hat{x}$ is therefore included in $\Omega \cap \mathbb{P}$.

We can consider more explicitly constraints with:

$$\Omega = \left\{x \in \mathbb{X} \mid g_j(x) \leq 0, \forall j = 1 \cdots C\right\} \equiv \left\{x \in \mathbb{X} \mid G(x) \leq 0\right\}$$

where $G(x) = [g_j(x), j = 1 \ldots C]^t$ and C is the number of scalar constraints. It is possible to define $g_j(x)$ as the following composition function $(\tilde{g}_j \circ F(x))$:

$$g_j(x) = \tilde{g}_j\left(F(x)\right)$$

The general multi-objective optimization problem therefore leads to more than one solution in $\hat{x}$ if any. We can choose a special solution arbitrarily if an algorithm leads to several solutions or we can transform the multi-objective optimization problem into a mono-objective optimization one (e.g. communication-first selection policy vs. control-first selection policy).

Here, we define a function $\tilde{f} \colon \mathbb{R}^m \to \mathbb{R}$, i.e. $f(x) \triangleq \tilde{f}(F(x))$, i.e. $f \triangleq \tilde{f} \circ F$, $f \colon \mathbb{R}^n \to \mathbb{R}$. This function can be parametrized by explicit parameters.

We consider the following general approach, which encompasses all optimization approaches which are based on a max min optimization approach:

$$\tilde{f} = \min_i \left( \check{f}_1, \cdots, \check{f}_{m'} \right)$$

$$(\hat{x}) = \arg \max_{x \in \Omega \subset \mathbb{X}} \left( \tilde{f} \right)$$

The function min is here the minimum over each component of a vector function $\check{F} = (\check{f}_1, \cdots, \check{f}_{m'})$ of dimension $m'$ $\leq m$ ($m \geq N$ where $N$ is the number of formations). More specifically $\check{F}$ is a linear combination (with a matrix A of size $m' \times m$) of functions of the individual function $f_i(x)$ which may be parametrized by a constraint $f_{t,i}$:

[Math. 1]

$$\check{F} = (\check{f}_1, \cdots, \check{f}_{m'}) = A \left( h_1(f_1(x), f_{t,1}), \cdots, h_m(f_m(x), f_{t,m}) \right)$$

Multiple formations case

For multiple formations 10, we also face a multi-objective optimization problem. If we consider the communication-first selection policy, then an exemplary approach is to minimize the resource usage cost $c_{com}$ for all formations 10 under a control performance inequality constraint for each formation:

$$\left( \hat{x}_{com}^{i=1:N}, \hat{x}_{ctrl}^{i=1:N} \right) = \arg \min_{x_{ctrl}^{i=1:N}, x_{com}^{i=1:N} \in \mathbb{X}} (c_{com})$$

$$s.t. \ u_{ctrl}^i \geq u_{ctrl,t}^i, i = 1 \ldots N, c_{com} \leq c_{com,t}$$

i.e. the allowed ranges correspond to $u_{ctrl}^i \geq u_{ctrl,t}^i$, $i = 1 \ldots N$ and $c_{com} \leq c_{com,t}$, determined during step S20.

The above optimization focuses on minimizing the resource usage cost. Like for the single formation case, it might be relevant instead to focus on the maximization of the control performance, for instance as follows:

$$\left( \hat{x}_{com}^{i=1:N}, \hat{x}_{ctrl}^{i=1:N} \right) = \arg \max_{x_{ctrl}^{i=1:N}, x_{com}^{i=1:N} \in \Omega_\uparrow} \left( \tilde{f}_\uparrow^u \left( u_{ctrl}^{i=1:N} \right) \right)$$

$$\Omega_\uparrow = \left\{ x_{ctrl}^i, x_{com}^i \in \mathbb{X} \mid u_{ctrl}^i \geq u_{ctrl,t}^i, i = 1 \ldots N, c_{com} \leq c_{com,t} \right\}$$

wherein $\tilde{f}_\uparrow^u$ is a scalar function defined e.g. according to the Weighted Sum or Tchebycheff approaches.

Another possible and advantageous approach is to establish a tradeoff between the two kinds of constraints using the same methodology as for a single formation:

$$\left( \hat{x}_{com}^{i=1:N}, \hat{x}_{ctrl}^{i=1:N} \right) = \arg \max_{x_{ctrl}^{i=1:N}, x_{com}^{i=1:N} \in \Omega_\uparrow} \left( (1-\lambda) \tilde{f}_\uparrow^u \left( u_{ctrl}^{i=1:N} \right) - \lambda c_{com} \right), \lambda \in [0,1]$$

$$\Omega_\uparrow = \left\{ x_{ctrl}^i, x_{com}^i \in \mathbb{X} \,|\, u_{ctrl}^i \geq u_{ctrl,t}^i, i = 1 \dots N, c_{com}^i \leq c_{com,t}^i \right\}$$

In case some or all the formations 10 cannot achieve a control performance in their respective ranges of allowed control performance values and/or the formations 10 cannot achieve a resource usage cost value in the range of allowed resource usage cost values (reference S211 in figure 2), it is possible to rely again on the updating of the allowed ranges. Again, we can meet two kinds of situations according to whether or not all constraints regions (allowed ranges) overlap with the Pareto frontier (but not with each other). In the case where the range of allowed resource usage cost overlaps with the Pareto frontier, a solution is to maximize the achievable control performance, e.g.:

$$\left(\hat{x}_{com}^{i=1:N}, \hat{x}_{ctrl}^{i=1:N}\right) = \arg \max_{x_{ctrl}^{i=1:N}, x_{com}^{i=1:N} \in \Omega_\downarrow} \left( \tilde{f}_\downarrow^u \left( u_{ctrl}^{i=1:N} \right) \right)$$

$$\Omega_\downarrow = \left\{ x_{ctrl}^i, x_{com}^i \in \mathbb{X} \,|\, c_{com} \leq c_{com,t}, G_\downarrow\left(u_{ctrl}^{i=1:N}, c_{com}\right) \leq 0 \right\}$$

As an example, it is relevant is to guarantee that all formations 10 suffer from a proportional degradation of their control performance:

$$G_\downarrow\left(u_{ctrl}^{i=1:N}, c_{com}\right) \leq 0 \Leftrightarrow c_{com} \leq c_{com,t}, \frac{u_{ctrl}^i}{u_{ctrl,t}^i} = \rho, i = 1 \dots N$$

Hence, the allowed range $c_{com} \leq c_{com,t}$ for the resource usage cost is unchanged, while the allowed ranges for the control performance values are modified by allowing any control performance value $u_{ctrl}^i \geq 0$. Since the allowed ranges of control performance values are modified (degraded) first, we have here a communication-first prioritization policy. Once the allowed ranges of control performance values have been modified, we use a control-first selection policy under a fairness (proportional) control performance degradation constraint.

The optimization can be conducted using $\tilde{f}_\downarrow^u = \tilde{f}_\uparrow^u$, or by using a different function such as:

$$\tilde{f}_\downarrow^u\left(u_{ctrl}^{i=1:N}\right) = u_{ctrl}^j, for\, any\, j \in [1, N]$$

Instead of using a fairness (proportional) control performance degradation constraint, it is possible to use instead a fairness degradation of the formation parameters, by using e.g. the following fairness constraints:

$$G_\downarrow\left(u_{ctrl}^{i=1:N}, c_{com}\right) \leq 0 \Leftrightarrow c_{com} \leq c_{com,t}, \frac{\breve{\theta}^i(u_{ctrl}^i)}{\breve{\theta}^i(u_{ctrl,t}^i)} = \rho, i = 1 \dots N$$

Overall, the problem can be re-written as:

$$\left(\hat{x}_{com}^{i=1:N}, \hat{x}_{ctrl}^{i=1:N}\right) = \arg \max_{x_{ctrl}^{i=1:N}, x_{com}^{i=1:N}} (\rho) \; s.t. \, c_{com} \leq c_{com,t}, h^i\left(u_{ctrl}^i, u_{ctrl,t}^i\right) = \rho, i = 1 \dots N$$

wherein $h^i\left(u_{ctrl}^i, u_{ctrl,t}^i\right) = h\left(u_{ctrl}^i, u_{ctrl,t}^i\right) = \frac{u_{ctrl}^i}{u_{ctrl,t}^i}$ or $\frac{\breve{\theta}^i(u_{ctrl}^i)}{\breve{\theta}^i(u_{ctrl,t}^i)}$.

II may occur that some of the equalities cannot be achieved on the Pareto frontier. It is better from that perspective to rely on inequality constraints:

$$\left(\hat{x}_{com}^{i=1:N}, \hat{x}_{ctrl}^{i=1:N}\right) = \arg \max_{x_{ctrl}^{i=1:N}, x_{com}^{i=1:N}} (\rho) \; s.t. \, c_{com} \leq c_{com,t}, h^i\left(u_{ctrl}^i, u_{ctrl,t}^i\right) \geq \rho, i = 1 \dots N$$

These two previous cases can be considered with a max-min problem as it reduces the *N* degrees of freedom in one degree of freedom:

$$\left(\hat{x}_{com}^{i=1:N}, \hat{x}_{ctrl}^{i=1:N}\right) = \arg \max_{x_{ctrl}^{i=1:N}, x_{com}^{i=1:N}} \left(\min_{i \in [1,N]} h^i\left(u_{ctrl}^i, u_{ctrl,t}^i\right)\right) \; s.t.\, c_{com} \le c_{com,t}$$

wherein:

$$\tilde{f}_{\downarrow}\left(u_{ctrl}^{i=1:N}\right) = \min_{i \in [1,N]} h^i\left(u_{ctrl}^i, u_{ctrl,t}^i\right)$$

$$G_{\downarrow}\left(u_{ctrl}^{i=1:N}, c_{com}\right) \le 0 \Leftrightarrow c_{com} \le c_{com,t}$$

The approach can be further extended to the cases where the range of allowed resource usage cost values does not overlap with the Pareto frontier. In that case, it is not only required to operate at a level of control performance below the original control performance constraint $u_{ctrl,t}^i$ but also with a communication cost above the original communication cost constraint $c_{com,t}$. The general problem can be solved as

$$\left(\hat{x}_{com}^{i=1:N}, \hat{x}_{ctrl}^{i=1:N}\right) = \arg \max_{x_{ctrl}^{i=1:N}, x_{com}^{i=1:N} \in \Omega_{\downarrow}} \left(\tilde{f}_{\downarrow}\left(u_{ctrl}^{i=1:N}, c_{com}\right)\right)$$

A possible solution may be to request all the performance values (control and resource usage) to degrade proportionally, i.e.

$$\left(\hat{x}_{com}^{i=1:N}, \hat{x}_{ctrl}^{i=1:N}\right)$$
$$= \arg \max_{x_{ctrl}^{i=1:N}, x_{com}^{i=1:N}} \left(\min\left(h^{u,1}\left(u_{ctrl}^1, u_{ctrl,t}^1\right), \dots, h^{u,N}\left(u_{ctrl}^N, u_{ctrl,t}^N\right), h^c\left(c_{com}, c_{com,t}\right)\right)\right)$$

wherein e.g.:

$$h^{u,i}\left(u_{ctrl}^i, u_{ctrl,t}^i\right) = \frac{\breve{\theta}^i(u_{ctrl}^i)}{\breve{\theta}^i(u_{ctrl,t}^i)}$$

$$h^c\left(c_{com}, c_{com,t}\right) = \frac{c_{com,t}}{c_{com}}$$

Generally speaking, the problem can be generalized as looking for the parameters $x_{ctrl}^i, x_{com}^i$ such that the performance values fulfil the constraints (ranges of allowed performance values):

$$u_{ctrl}^i \ge u_{ctrl,t}^i, i = 1 \dots N, c_{com} \le c_{com,t}$$

according to any multiple objective optimization algorithm leading to a unique solution on the Pareto frontier, if any. In case the target objective cannot be achieved, then the algorithm searches for achievable performance values $u_{ctrl,a}^i$, $i = 1 \dots$ N, $c_{com,a}$ (i.e. by updating the allowed ranges) on the Pareto frontier according to a predetermined selection policy, such as communication- or control-first selection policy, and a predetermined prioritization policy.

Accordingly, during step S20, the ranges of allowed performance values may be obtained by determining the values $u_{ctrl,t}^i$, $i = 1 \dots$ N and $c_{com,t}$.

During step S21, the control parameters $x_{ctrl}^i$ and the communication parameters $x_{com}^i$ are optimized in order to satisfy the control performance constraints and the resource usage cost constraint according to a given selection policy (such as communication-first, control-first, fairness i.e. proportional degradation, etc.):

$$\left(\hat{x}_{com}^{i=1:N}, \hat{x}_{ctrl}^{i=1:N}\right) = \arg \max_{x_{ctrl}^{i=1:N}, x_{com}^{i=1:N} \in \Omega_{\uparrow}} \left(\tilde{f}_{\uparrow}\left(u_{ctrl}^{i=1:N}, -c_{com}\right)\right)$$

$$\Omega_{\uparrow} = \left\{ x_{ctrl}^{i=1:N}, x_{com}^{i=1:N} \in \mathbb{X} \,\middle|\, u_{ctrl}^i \geq u_{ctrl,t}^i, i = 1 \dots N, c_{com} \leq c_{com,t} \right\}$$

wherein $\tilde{f}_{\uparrow}(.)$ is a scalar function defined to implement the selection policy (along with $\Omega_{\uparrow}$), i.e. to select one unique solution among those on the Pareto frontier, if any.

If it is not possible to achieve performance values in the allowed ranges (reference S211 in figure 2) then the allowed ranges may be updated (by modifying at least one allowed range) to try and find values of the control parameters and of the communication parameters which enable achieving performance values in the updated allowed ranges, during step S22:

$$\left(\hat{x}_{com}^{i=1:N}, \hat{x}_{ctrl}^{i=1:N}\right) = \arg \max_{x_{ctrl}^{i=1:N}, x_{com}^{i=1:N} \in \Omega_{\downarrow}} \left(\tilde{f}_{\downarrow}\left(u_{ctrl}^{i=1:N}, -c_{com}\right)\right)$$

$$\Omega_{\downarrow} = \left\{ x_{ctrl}^i, x_{com}^i \in \mathbb{X} \,\middle|\, G_{\downarrow}\left(x_{ctrl}^i, x_{com}^i\right) \leq 0 \right\}$$

wherein $G_{\downarrow}(.)$ is a vector of functions defined to select a non-empty segment of the Pareto frontier by reducing the constraints on one or more allowed ranges (in other words, $G_{\downarrow}$ defines how the ranges of allowed performance values are updated during step S22) and $\tilde{f}_{\downarrow}(.)$ a scalar function defined to implement the selection policy. The step S22 can be made of several steps during which $G_{\downarrow}$ may be modified (e.g. by increasing the number of modified ranges of allowed values, i.e. by increasing the number of relaxed constraints) and possibly $\tilde{f}_{\downarrow}$ may be modified, until a solution is found. Detailed examples are provided hereinbelow.

When a solution is found, then the values of the control parameters and of the communication parameters which have enabled achieving performance values in the updated allowed ranges provide the performance values $u_{ctrl,a}^i$, $i = 1 \dots N$ and/or $c_{com,a}$ achieved for the selected solution:

$$u_{ctrl,a}^i = u_{ctrl}^i(\hat{x}_{com}^i, \hat{x}_{ctrl}^i), i = 1 \dots N$$

$$c_{com,a} = c_{com}(\hat{x}_{com}^{i=1\dots N}, \hat{x}_{ctrl}^{i=1\dots N})$$

Then, during step S23, the values of the formation parameters and/or of the network parameter may be updated:

$$\begin{cases} u_{ctrl,a}^i \longmapsto p_{form,a}^i, i = 1 \dots N \\ c_{com,a} \longmapsto p_{net,a} \end{cases}$$

The above behavior is summarized in figure 8.

Implementation of a fairness solution

From the point of view of the applications, the solution that guarantees a proportional degradation of the formation parameters with respect to their prior values appears as very relevant, although non-limitative, as it provides a kind of fairness between all formations 10. It occurs that this optimization problem can be solved using the well know max-min optimization approach:

$$\left(\hat{x}_{com}^{i=1:N}, \hat{x}_{ctrl}^{i=1:N}\right) = \arg \max_{x_{ctrl}^{i=1:N}, x_{com}^{i=1:N}} \min_i \left(h\left(u_{ctrl}^i, u_{ctrl,t}^i\right)\right) \ s.t. \ c_{com} \leq c_{com,t}$$

with e.g., $h\left(u_{ctrl}^i, u_{ctrl,t}^i\right) = \frac{1}{\alpha_i} \frac{\bar{\theta}(u_{ctrl}^i)}{\bar{\theta}(u_{ctrl,t}^i)}$ or $h\left(u_{ctrl}^i, u_{ctrl,t}^i\right) = \frac{1}{\alpha_i} \frac{u_{ctrl}^i}{u_{ctrl,t}^i}$ , with $\alpha_i$ chosen to change, if we want, the weight for each formation and can be chosen all equal to one. Note that the proposed methodology also operates if the communications parameters are kept constant. The algorithm can still be used to decrease the formation parameters down to a value compatible with the radio environment.

Separation of formation parameters in two groups

In some cases, the formation parameters can be separated in two groups, the ones which are not updated for some reasons, $p^i_{form,2}$ and others which can be updated, function of the effective control performance, $p^i_{form,1}$, i.e.

$$p^i_{form} = \left[ p^i_{form,1}, p^i_{form,2} \right]$$

. Note that $p^i_{form,2}$ can depend on the resulting $p^i_{form,1}$. It means that $\breve{\theta}^i_{form}$ is decomposed in two functions

$$\breve{\theta}^i_{form,1} : u_{ctrl} \longmapsto p_{form,1}, i = 1 \dots N$$

$$\breve{\theta}^i_{form,2} : p_{form,1} \longmapsto p_{form,2}, i = 1 \dots N$$

The function $\breve{\theta}^i_{form,2}$ can be a spacing policy with $p^i_{form,1}$ being the (maximum) velocity and $p^i_{form,2}$ the (minimum) distance. For instance, in case two platoons can communicate well in advance using a cellular network, the two platoons can adjust both their IVD and velocities before crossing (i.e. with a known convergence speed). However, if the platoons can only communicate in distributed mode, they have not much time to adapt their configuration and it might be more suitable to simply reduce the speed and not increase the IVD (this operation may not be finished before the platoons are crossing each other). It might also not be desirable to change the IVD as it might be needed to increase it again later but with not enough space due to traffic congestion. We can do the same type of decomposition for $\theta^i_{form}$.

Generalization of the proposed optimization algorithms

We now provide some detailed examples for steps S21 and S22 in the framework of the above section "General multi-objective problem". We present first examples of possible functions that can be used to transform the multi-objective optimization problem into a mono-objective optimization problem. We consider *N* formations, such that we have at input a maximum of *N* + 1 ranges of allowed performance ranges defined by respective performance target values:

- control performance constraints: $u^i_{ctrl,t}$, $i \in \mathcal{J}$ c {1, $\cdots$, *N}, 0 $\leq$ Card($\mathcal{J}$) $\leq$ N,*
- resource usage cost constraint (if any): $c_{com,t}$

We now give possible examples for the functions $h_i$, *i* = 1 $\cdots$ *N* and for the matrix A (see equation [Math. 1] above), which can be used during step S21 and step S22.
For instance, the constraints (ranges of allowed performance values) may be expressed as follows:

$$\tilde{g}_i\left( u^i_{ctrl}, u^i_{ctrl,t} \right) = u^i_{ctrl,t} - u^i_{ctrl} \geq 0, \forall i \in \mathcal{J} \subset \{1, \cdots, N\},$$

$$\tilde{g}_{N+1}\left( c_{com}, c_{com,t} \right) = c_{com} - c_{com,t} \geq 0$$

For instance, we can consider the following functions for $h_i$:

- Case 1: relative objective function over fundamental target (formation and network):

$$h_i\left( u^i_{ctrl}, u^i_{ctrl,t} \right) = \frac{\breve{\theta}^i(u^i_{ctrl})}{\breve{\theta}^i(u^i_{ctrl,t})}, i = 1 \cdots N$$

$$h_{N+1}(c_{com}, c_{com,t}) = \frac{\breve{\theta}_{net}(c_{com,t})}{\breve{\theta}_{net}(c_{com})}$$

- Case 2: relative objective function over target (control performance and inverse of resource usage cost):

$$h_i(u_{ctrl}^i, u_{ctrl,t}^i) = \frac{u_{ctrl}^i}{u_{ctrl,t}^i}, i = 1 \cdots N$$

$$h_{N+1}(c_{com}, c_{com,t}) = \frac{c_{com,t}}{c_{com}}$$

- Case 3: objective functions (formation and network):

$$h_i(u_{ctrl}^i, u_{ctrl,t}^i) = \breve{\theta}^i(u_{ctrl}^i),$$

$$h_{N+1}(c_{com}, c_{com,t}) = -\breve{\theta}(c_{com})$$

- Case 4: objective functions (control performance and opposite of resource usage cost):

$$h_i(u_{ctrl}^i, u_{ctrl,t}^i) = u_{ctrl}^i,$$

$$h_{N+1}(c_{com}, c_{com,t}) = -c_{com}$$

For instance, we can consider the following definitions for the matrix A:

- Case 1 (wherein $\alpha_i$ may be equal to 1 for any $i = 1 \cdots N + 1$):

$$A = \begin{pmatrix} \frac{1}{\alpha_1} & 0 & 0 \\ 0 & \ddots & 0 \\ 0 & 0 & \frac{1}{\alpha_{N+1}} \end{pmatrix}$$

- Case 2 (wherein $\alpha_i$ may be equal to 1 for any $i = 1 \cdots N + 1$):

$$A = \left( (1-\lambda) \begin{pmatrix} \frac{1}{\alpha_1} & \cdots & 0 & 0 \\ \vdots & \ddots & 0 & 0 \\ 0 & \cdots & \frac{1}{\alpha_N} & 0 \end{pmatrix} + \lambda \begin{pmatrix} 0 & \cdots & 0 & \frac{1}{\alpha_{i+1}} \\ \vdots & \ddots & 0 & \frac{1}{\alpha_{i+1}} \\ 0 & \cdots & 0 & \frac{1}{\alpha_{i+1}} \end{pmatrix} \right)$$

- Case 3 (wherein $\alpha_i$ may be equal to 1 for any $i = 1 \cdots N + 1$):

$$A = \left( (1-\lambda) \begin{pmatrix} \frac{1}{\alpha_1} & \cdots & \frac{1}{\alpha_N} & 0 \end{pmatrix} + \lambda \begin{pmatrix} 0 & \cdots & 0 & \frac{1}{\alpha_{N+1}} \end{pmatrix} \right)$$

These examples of functions $h_i$ and matrix A can be used during step S21 by considering the original ranges of allowed performances values and a given selection policy (communication first i.e. minimizing resource usage cost, control first i.e. maximizing control performance, fairness policy, etc.) for selecting a solution on the Pareto frontier (if any).

If there is no solution on the Pareto frontier when considering the initial ranges of allowed performance values, then some constraints on the performance values need to be relaxed. During step S22, it is possible to use different functions $h_i$ and matrix $A$ than during step S21, and also to use a different selection policy than during step S21.

We now detail three different examples of step S22 for different prioritization policies (priorities on the ranges of allowed performance values) and different selection policies (choice of the solution on the Pareto frontier).

Step S22 with communication first prioritization policy

Even if matrix A corresponds to the case 1 above during step S21, we consider for step S22 the case 2 or 3 for matrix $A$.

It should be noted that, when considering the communication-first selection policy during step S21, we usually set $\lambda = 1$ (in order to maximize resource usage performance). However, in this example, we use a prioritization policy which implies that we initially do not change the range of allowed resource usage performance values and we modify (degrade) only all or part of the ranges of allowed control performance values. Since, the range of allowed resource usage performance values is not modified, we apply in this example a control-first selection policy to maximize control performance in the modified (degraded) ranges of allowed control performance values. Accordingly, we initially set $\lambda = 0$ and the modified ranges of allowed control performance values may allow any positive value for the control performance.

If no solution is found even by allowing any positive value for the control performance of the control algorithms of the formations 10, then we modify (degrade) also the range of allowed resource usage performance values. For instance, we may further allow any resource usage performance value. We may then set $\lambda = 1$ and apply a communication-first selection policy to search for the solution on the Pareto frontier which maximizes resource usage performance (i.e. which minimizes resource usage cost).

Accordingly, in this example, the ranges of allowed control performance values are degraded first, and the range of allowed resource usage performance values is degraded next only if no solution is found by degrading only the ranges of allowed control performance values. Hence, a solution is found during step S22 by performing at most two optimization phases.

Step S22 with control first prioritization policy

Even if matrix $A$ corresponds to the case 1 above during step S21, we consider for step S22 the case 2 or 3 for matrix $A$.

It should be noted that, when considering the control-first selection policy during step S21, we usually set $\lambda = 0$ (in order to maximize control performance). However, in this example, we use a prioritization policy which implies that we initially do not change the ranges of allowed control performance values and we modify (degrade) only the ranges of allowed resource usage performance value. Since, the ranges of allowed control performance values are not modified, we apply in this example a communication-first selection policy to maximize resource usage performance in the modified (degraded) range of allowed resource usage performance values. Accordingly, we initially set $\lambda = 1$ and the modified range of allowed resource usage performance values may allow any positive value for the resource usage performance.

If no solution is found even by allowing any value for the resource usage performance of the formations 10, then we modify (degrade) also the ranges of allowed control performance values. For instance, we may further allow any control performance value. We may then set $\lambda = 0$ and apply a control-first selection policy to search for the solution on the Pareto frontier which maximizes control performance.

Accordingly, in this example, the range of allowed resource usage performance values are degraded first, and the ranges of allowed control performance values are degraded next only if no solution is found by degrading only the range of allowed resource usage performance values. Hence, a solution is found during step S22 by performing at most two optimization phases.

Step S22 with no priority on constraints

Even if the functions $h_i$ correspond to the case 3 or 4 during step S21, we preferably consider for step S22 the case 1 or 2 for the functions $h_i$. During step S22, the cases 1, 2 or 3 are possible for matrix $A$. For full fairness, i.e. no priority on the constraints, it is possible to consider a matrix $A$ which corresponds to an identity matrix of size $N + 1$ during step S22. The goal is therefore to search for a solution that tends to apply a same degradation factor to all ranges of allowed performance values, i.e. with respect to the target values $u^i_{ctrl,t}$, $i = 1 \ldots N + 1$, and $c_{com,t}$. Considering that the matrix $A$ is the identity matrix $N + 1$, and the case 1 for the functions $h_i$, then the max min will tend to find a solution such that:

$$\frac{u^i_{ctrl}}{u^i_{ctrl,t}} \approx \frac{c_{com,t}}{c_{com}} \approx \rho < 1$$

which maximizes the degradation factor $\rho$ when allowing any performance value for the control performance and the resource usage performance.

Accordingly, in this example all ranges of allowed performance values are degraded simultaneously. Hence, a solution is found during step S22 by performing a single optimization phase.

We now describe optional and non-limitative embodiments for some aspects of the present disclosure.

Optimization with a reference performance model

It is better to rely on an analytical model to evaluate the control performance in the optimization stage (steps S21 and S22). The issue is that the control algorithms used in practice are usually complex, such that it may be difficult in some cases to get an analytical expression of their control performance. A solution is then to rely on a control performance model related to a simple control algorithm and use another control algorithm for the actual control of the formation 10. The goal is then to be able to account for the difference in the control algorithms, e.g. by applying a margin on the control performance constraints $u^i_{ctrl,t}$ (validated e.g. from simulation).

Separate optimization of the communication and control parameters

As already mentioned, the control performance of the control algorithm of each formation 10 depends on both the communication and control parameters according to a relationship of the kind:

$$u^i_{ctrl}(x^{i=1:N}_{com}, x^i_{ctrl}) = \tilde{f}^{ctrl}(u^i_{com}(x^{i=1:N}_{com}), x^i_{ctrl})$$

In addition to what has already been introduced, the control performance depends on the communication performance. Hence, to conduct the optimization, we may need a method to compute the communication performance function $u^i_{com}(x^{i=1:N}_{com})$ (such as a PDR profile) from the communication parameters of all communicating nodes 11. This could be done by using a system simulator but at the expense of a high processing complexity, or by using look-up-tables (LUTs) but at the expense of a high storage complexity. The most appropriate solution is to rely on an analytical transmission model that would provide from the parameters $x^{i=1:N}_{com}$ and other parameters describing the radio channel properties the communication performance required to compute the control performance. The problem of this last approach is that it allows only very simple scenarios (e.g. with neglecting packet collision or with very simplified packet collision description). For example, it is possible to use the model in [Gonzalez2019], which is semi-analytic and uses analytic expressions but also relations which are deduced empirically based on system-level simulation. It considers packet collision but in a simplified manner and considers the simplest homogeneous model for this one (infinite regular one-dimensional vehicle position and same communication parameter for all vehicles).

Similarly, we may also need a method to compute the control performance function $u^i_{ctrl}(.)$ from the communication performance function and the control parameters. Just like for the communication performance function, several approaches can be used for that purpose such as Monte-Carlo simulations. It is easier to rely on an analytical expression such as the lower bound for the convergence speed of the first-order static consensus algorithm in [Pereira2011]. In this case, we can deduct from the intra-platoon homogeneity (e.g. same PDR for all vehicle) a PDR matrix from the PDR profile, a given topology and a given number of vehicles in formation (and possibly a correlation matrix from correlation characteristics), then we can construct a (symmetric) matrix and finally compute its spectral radius.

Another solution can be Monte-Carlo simulation of the control algorithm to obtain a relation between communication performances profiles and control performance. It allows to consider all control algorithms, scenario types and control performance indicators type (e.g. probability of emergency breaking), not only those for which we have an analytic version (e.g. lower-bound on true performance as previously).

Use of an individual transmission model for multiple formations

The proposed technology is applicable to any kind of formation 10. However, it is easier to implement in the case of homogeneous formations, i.e. formations organized according to a regular geometrical arrangement allowing all the communicating nodes 11 to use the same communication and control parameters (except possibly the leader which can have different parameters from those of the followers). The homogeneous case allows to reduce the number of parameters to optimize (almost divided by $N$) and to rely on a simplified but still accurate model to evaluate the communication performance.

Dealing with multiple platoons, the formations 10 interacting with each other are in general homogeneous individually but not globally. It is obviously much more complex to design a communication model compatible with such a situation. We propose here an approach which allows to use a simple homogeneous model even in non-homogeneous situations. Let's assume that a homogenous communication model is available as a LUT (which can be obtained from a system-level simulation or from a simplified (quasi-)analytic model).

The communication performance may be measured in terms of PDR, which depends on the distance between the transmitter and the receiver (as we consider homogeneity, it does not depend on the particular transmitter and receiver positions). It is also possible to consider the correlation between these PDRs but at the expense of a significant increase of the complexity.

Concerning the communication parameters, we consider here the dependence of the PDR to at least the coverage (which is related to the transmission power, mean path gain power, MCS frame error rate (FER) vs. signal to noise ratio (SNR) and a reference FER value, possibly of sensing threshold and/or half-duplex error and corresponds to the coverage without shadowing nor packet collision) and the packet rate. If the transmission power is constant (e.g. at the maximum possible), coverage is not needed. It is possible to normalize the distance to vehicles spacing or to coverage.

For the non-limitative example considered here, we consider coverage $Cov$ and packet rate $PR$ as communication elementary parameters, i.e. $x_{com} = (Cov, PR)$ and PDR (profile of PDR) as communication performance, i.e. the homogeneous model (therefore for one formation with homogeneous intra-formation parameters) is the function:

$$\mathbb{R}^{2+} \longmapsto \mathbb{F}^{\mathbb{R}^+ \mapsto \mathbb{R}^+}$$

$$Cov, PR \longmapsto PDR(d; Cov, PR)$$

wherein $\mathbb{F}^{\mathbb{R}^+ \mapsto \mathbb{R}^+}$ is the set of continuous functions from $\mathbb{R}^+$ to $\mathbb{R}^+$ (more precisely, decreasing to 0 as distance tends to infinity).

This PDR should represent PDR without half duplex errors. To obtain the final PDR, we consider $PDR(d; Cov, PR)$ $\times$ (1 - $HDER(PR)$) where $HDER(PR)$ is the function of half-duplex error rate which does not depend on distance or on the coverage communication elementary parameter.

In order to obtain and heterogeneous model from homogeneous model, we can make the following assumptions:

- when $d$ is the distance normalized to the coverage distance (i.e. divided by the coverage distance), we consider that each formation has the same PDR model $PDR(d; Cov_{Glon}, PR_{Glob})$,

- $Cov_{Glob}$ and $PR_{Glob}$ are computed as a given function of the values of $x^i_{com} = \left(Cov^i, PR^i\right)$ for all $i$ and possibly of spacing $\Delta_i$ (IVD) for each formation 10 (and possibly those values associated to the additional non-platoon vehicles in an average manner).

We describe here two possible methods to obtain $Cov_{Glob}$ and $PR_{Glob}$ from the $x^i_{com} = \left(Cov^i, PR^i\right)$, $\forall i = 1 \cdots N$ (spacings $\Delta_i$ are not considered here):

- Approach 1:

$$Cov_{Glob} = \sum_{i=1}^{N} Cov^i$$

$$PR_{Glob} = \sum_{i=1}^{N} \frac{Cov^i}{\sum_{j=1}^{N} Cov^j} PR^i$$

- Approach 2:

$$PR_{Glob} = \sum_{i=1}^{N} PR^i$$

$$Cov_{Glob} = \sum_{i=1}^{N} \frac{PR^i}{\sum_{j=1}^{N} PR^j} Cov^i$$

These two approaches lead to the same system load which is linear (system load of the sum is the sum of system loads of each formation): $SL \triangleq PR_{Glob} \times Cov_{Glob} = \sum_{i=1}^{N} Cov^i PR^i = \sum_{i=1}^{N} SL^i$.

The approach 1 is exact when all the formations 10 have the same communication parameters but overestimates the PDR for very different communication parameters.

On the other hand, the approach 2 is coherent for very different communication parameters (from a case with clearly different control performance for two platoons of same size) but is not exact in case of homogeneous same formation (i.e. same communication parameters).

Use of two control performance functions

When we do not have simple formula for the control performance of a given control algorithm, we can use another control performance indicators which we think close to the performance with the control algorithm we use. In this case, we can use a given control performance indicator for the optimization in steps S21 and S22 (for computation complexity reasons) and another control performance indicator which uses the obtained communication (and possibly control) parameters, and which is more realistic (e.g. this one can be computed by Monte-Carlo simulations). Then, it is possible to use this control performance indicator with fixed $u_{com}^i$, i.e. fixed communication parameters, to optimize control parameters related to this control performance indicator, i.e. maximization of control performance indicator over its own control parameters separately for each formation. The function that updates the formation parameters (in step S23) should use this second type of control performance indicator, not the one used during the optimization (steps S21 and S22).

It is emphasized that the present disclosure is not limited to the above exemplary embodiments. Variants of the above exemplary embodiments are also within the scope of the present invention.

For instance, the above exemplary embodiments have been provided by focusing on a single (global) network parameter. However, as discussed above, it is also possible to consider in some cases more than one network parameter, for instance one network parameter per formation 10. The same approaches discussed above for handling the plurality of formation parameters can be applied similarly for handling the plurality of network parameters.

**REFERENCES**

[Chen2005] Yang Quan Chen and Zhongmin Wang, "Formation control: a review and a new consideration", 2005 IEEE/RSJ International Conference on Intelligent Robots and Systems, 2005, pp. 3181-3186, doi: 10.1109/IROS.2005.1545539

[Sybis2019] M. Sybis et al., "Communication Aspects of a Modified Cooperative Adaptive Cruise Control Algorithm", in IEEE Transactions on Intelligent Transportation Systems, vol. 20, no. 12, pp. 4513-4523, Dec. 2019, doi: 10.1109/TITS.2018.2886883

[Pereira2011] S. Silva Pereira and A. Pages-Zamora, "Consensus in Correlated Random Wireless Sensor Networks", IEEE Transactions on Signal Processing, vol. 59, no 12, pp. 6279-6284, Dec. 2011, doi: 10.1109/TSP.2011.2166552

[Zhang2007] Q. Zhang and H. Li, "MOEA/D: A Multiobjective Evolutionary Algorithm Based on Decomposition," in IEEE Transactions on Evolutionary Computation, Vol. 11, no. 6, pp. 712-731, Dec. 2007, doi: 10.1109/TEVC.2007.892759

[Gonzales2019] Manuel Gonzalez-Martin, Miguel Sepulcre, Rafael Molina-Masegosa and Javier Gozalvez, "Analytical Models of the Performance of C-V2X Mode 4 Vehicular Communications", IEEE Transactions on Vehicular Technology, Vol. 68, Issue 2, Feb. 2019

**Claims**

1. A computer implemented method (20) for configuring values of a set of parameters of at least two moving formations, each formation comprising a plurality of respective communicating nodes, wherein the set of parameters comprises at least one prior parameter, wherein each prior parameter corresponds to a formation parameter for each formation or to a network parameter for the formations, wherein the formation parameter of a formation defines a geometrical arrangement of the communicating nodes of the formation and the network parameter of a formation defines communication resources that are allocated to said formation for exchanging data on wireless links, wherein each prior parameter has a predetermined value and a predetermined modification of a communication environment of the formations is about to occur,

   wherein the set of parameters further comprises, for each formation:

   - a control parameter of a control algorithm used by the formation to maintain the geometrical arrangement,
   - a communication parameter for configuring the wireless links between the communicating nodes of the formation, said wireless links being used for exchanging data related to the control algorithm,

   wherein said configuration method comprises steps of:

   - for each prior parameter: (S20) obtaining a range of allowed performance values based on the corresponding prior parameter value,
   - (S21) searching for values of the control parameters and of the communication parameters of the formations which enable achieving an allowed performance value within each range when considering that the modification of the communication environment of the formations has occurred,
   - if it is not possible to achieve an allowed performance value for each range: (S22) searching for updated ranges of allowed performance values for which it is possible to determine values of the control parameters and of the communication parameters which enable achieving an allowed performance value for each updated range when considering that the modification of the communication environment has occurred,
   - (S23) determining an updated value of the at least one prior parameter based on the values of the control parameters and of the communication parameters which enable achieving an allowed performance value for each updated range of allowed performance values.

2. Method (20) according to claim 1, wherein the range of allowed performance values for a formation parameter corresponds to a range of allowed control performance values for the control algorithm used by said formation and/or the range of allowed performance values for a network parameter corresponds to a range of allowed resource usage performance values for the use of the allocated communication resources by the formations.

3. Method (20) according to claim 2, wherein the set of parameters comprises a plurality of prior parameters which include a formation parameter for each formation and at least one network parameter for all formations and, if it is not possible to find values of the control parameters and values of the communication parameters of the formations which enable achieving an allowed performance value for each range, then searching for updated ranges comprises degrading the allowed control performance values for at least one formation.

4. Method (20) according to claim 3, wherein searching for updated ranges comprises degrading first the allowed control performance values before degrading, if required, the allowed resource usage performance values.

5. Method (20) according to claim 2, wherein the set of parameters comprises a plurality of prior parameters which include a formation parameter for each formation and at least one network parameter for all formations and, if it is not possible to find values of the control parameters and values of the communication parameters of the formations which enable achieving an allowed performance value for each range, then searching for updated ranges comprises degrading the allowed resource usage performance values for the formations.

6. Method (20) according to claim 5, wherein searching for updated ranges comprises degrading first the allowed resource usage performance values before degrading, if required, the allowed control performance values.

7. Method (20) according to any one of claims 3, 4 and 6, wherein searching for updated ranges by degrading the allowed control performance values for the formations comprises using a same degradation factor for all or a plurality of the formations.

8. Method (20) according to any one of claims 2 to 7, wherein the allowed control performance values for a control algorithm are representative of allowed convergence speed values for said control algorithm.

9. Method (20) according to any one of claims 2 to 8, wherein the allowed resource usage performance values are representative of a global interference level generated by all formations when using the allocated communication resources.

10. Method (20) according to any one of the preceding claims, wherein the formation parameter of each formation is representative of at least one among the following:

- a distance between communicating nodes of the formation,
- a shape of the geometrical arrangement of the formation,
- a velocity of a communicating node of the formation.

11. Method (20) according to any one of the preceding claims, wherein an allocated communication resource, included in a network parameter, is any of the following:

- at least one frequency bandwidth,
- at least one spreading or scrambling code,
- at least one temporal pattern.

12. Method (20) according to any one of the preceding claims, carried out by a configuration server included in at least one communicating node of a formation or separate from the formations.

13. Computer program product comprising instructions which, when executed by at least one processor, configure said at least one processor to carry out a method (20) according to any one of the preceding claims.

14. Configuration server (30) comprising at least one processor, at least one memory and at least one communication module, wherein the at least one processor is configured to carry out a method (20) according to any one of claims 1 to 12.

15. Configuration server (30) according to claim 14, included in at least one communicating node of a formation or separate from the formations.

**Patentansprüche**

1. Computerimplementiertes Verfahren (20) zum Einrichten von Werten einer Gruppe von Parametern von wenigstens zwei sich bewegenden Formationen, wobei jede Formation eine Mehrzahl jeweiliger Kommunikationsknoten umfasst, wobei die Gruppe von Parametern wenigstens einen früheren Parameter umfasst, wobei jeder frühere Parameter einem Formationsparameter für jede Formation oder einem Netzwerkparameter für die Formationen entspricht, wobei der Formationsparameter einer Formation eine geometrische Anordnung der Kommunikationsknoten der Formation definiert und der Netzwerkparameter einer Formation Kommunikationsressourcen definiert, welche der Formation zum Austauschen von Daten über drahtlose Verbindungen zugeteilt sind, wobei jeder frühere Parameter einen vorbestimmten Wert aufweist und eine vorbestimmte Modifizierung einer Kommunikationsumgebung bevorsteht, wobei die Gruppe von Parametern für jede Formation ferner umfasst:

- einen Steuerparameter eines Steueralgorithmus, welcher durch die Formation verwendet wird, um die geometrische Anordnung beizubehalten,
- einen Kommunikationsparameter zum Einrichten der drahtlosen Verbindungen zwischen den Kommunikationsknoten der Formation, wobei die drahtlosen Verbindungen zum Austauschen von Daten verwendet werden, welche auf den Steueralgorithmus bezogen sind,

wobei das Einrichtungsverfahren nachfolgende Schritte umfasst:

- für jeden früheren Parameter: (S20) Erhalten eines Bereichs zugelassener Leistungswerte auf Grundlage des entsprechenden früheren Parameterwertes,
- (S21) Suchen nach Werten der Steuerparameter und der Kommunikationsparameter der Formationen, welche ein Erreichen eines zugelassenen Leistungswertes innerhalb jedes Bereichs ermöglichen, wenn berücksichtigt wird, dass die Modifizierung der Kommunikationsumgebung der Formationen aufgetreten ist,
- falls es nicht möglich ist, einen zugelassenen Leistungswert für jeden Bereich zu erhalten: (S22) Suchen nach aktualisierten Bereichen zugelassener Leistungswerte, für welche ein Bestimmen von Werten der Steuerparameter und der Kommunikationsparameter möglich ist, welche ein Erreichen eines zugelassenen Leistungswertes für jeden aktualisierten Bereich ermöglichen, wenn berücksichtigt wird, dass die Modifizierung der Kommunikationsumgebung aufgetreten ist,
- (S23) Bestimmen eines aktualisierten Wertes des wenigstens einen früheren Parameters auf Grundlage der Werte der Steuerparameter und der Kommunikationsparameter, welche ein Erreichen eines zugelassenen Leistungswertes für jeden aktualisierten Bereich zugelassener Leistungswerte ermöglichen.

2. Verfahren (20) nach Anspruch 1, wobei der Bereich zugelassener Leistungswerte für einen Formationsparameter einem Bereich zugelassener Steuerleistungsparameter für den Steueralgorithmus entspricht, welche von der Formation verwendet werden, und/oder dem Bereich zugelassener Ressourcenverwendung-Leistungsparameter für die Verwendung der zugeteilten Kommunikationsressourcen durch die Formationen entspricht.

3. Verfahren (20) nach Anspruch 2, wobei die Gruppe von Parametern eine Mehrzahl früherer Parameter, welche einen Formationsparameter für jede Formation, und wenigstens einen Netzwerkparameter für alle Formationen umfasst, und wobei, falls es nicht möglich ist, Werte der Steuerparameter und Werte der Kommunikationsparameter der Formationen zu finden, welche ein Erreichen eines zugelassenen Leistungswertes für jeden Bereich ermöglichen, daraufhin ein Suchen nach aktualisierten Bereichen ein Herabsetzen der zugelassenen Steuerleistungswerte für wenigstens eine Formation umfasst.

4. Verfahren (20) nach Anspruch 3, wobei ein Suchen nach aktualisierten Bereichen zuerst ein Herabsetzen der zugelassenen Steuerleistungswerte vor einem Herabsetzen, falls erforderlich, der zugelassenen Ressourcenverwendung-Leistungsparameter umfasst.

5. Verfahren (20) nach Anspruch 2, wobei die Gruppe von Parametern eine Mehrzahl früherer Parameter umfasst, welche einen Formationsparameter für jede Formation, und wenigstens einen Netzwerkparameter für alle Formationen umfasst, und wobei, falls es nicht möglich ist, Werte der Steuerparameter und Werte der Kommunikationsparameter der Formationen zu finden, welche ein Erreichen eines zugelassenen Leistungswertes für jeden Bereich ermöglichen, daraufhin ein Suchen nach aktualisierten Bereichen ein Herabsetzen der zugelassenen Ressourcenverwendung-Leistungsparameter für die Formationen umfasst.

6. Verfahren (20) nach Anspruch 5, wobei ein Suchen nach aktualisierten Bereichen zuerst ein Herabsetzen der zugelassenen Ressourcenverwendung-Leistungsparameter vor einem Herabsetzen, falls erforderlich, der zugelassenen Steuerleistungswerte umfasst.

7. Verfahren (20) nach einem der Ansprüche 3, 4 und 6, wobei ein Suchen nach aktualisierten Bereichen durch Herabsetzen der zugelassenen Steuerleistungswerte für die Formationen ein Verwenden eines gleichen Herabsetzungsfaktors für alle oder eine Mehrzahl der Formationen umfasst.

8. Verfahren (20) nach einem der Ansprüche 2 bis 7, wobei die zugelassenen Steuerleistungswerte für einen Steueralgorithmus repräsentativ für Konvergenzgeschwindigkeitswerte für den Steueralgorithmus sind.

9. Verfahren (20) nach einem der Ansprüche 2 bis 8, wobei die zugelassenen Ressourcenverwendung-Leistungsparameter repräsentativ für ein globales Interferenzniveau sind, welche durch alle Formationen erzeugt wird, wenn die zugeteilten Kommunikationsressourcen verwendet werden.

10. Verfahren (20) nach einem der vorhergehenden Ansprüche, wobei der Formationsparameter jeder Formation repräsentativ für wenigstens eines aus den folgenden ist:

- einen Abstand zwischen Kommunikationsknoten und der Formation,

- einer Form der geometrischen Anordnung der Formation,
- einer Geschwindigkeit eines Kommunikationsknotens der Formation.

11. Verfahren (20) nach einem der vorhergehenden Ansprüche, wobei eine zugeteilte Kommunikationsressource, welche in einem Netzwerkparameter umfasst ist, ein jegliches der folgenden ist:

- wenigstens eine Frequenzbandbreite,
- wenigstens eine Verteilung oder ein Verwürfelungscode,
- wenigstens ein zeitliches Muster.

12. Verfahren (20) nach einem der vorhergehenden Ansprüche, welches durch einen Einrichtungsserver durchgeführt wird, welcher in wenigstens einem Kommunikationsknoten einer Formation umfasst ist oder von den Formationen getrennt ist.

13. Computerprogrammprodukt, umfassend Anweisungen, welche, wenn sie durch wenigstens einen Prozessor ausgeführt werden, den wenigstens einen Prozessor dazu einrichten, ein Verfahren (20) nach einem der vorhergehenden Ansprüche durchzuführen.

14. Einrichtungsserver (30), umfassend wenigstens einen Prozessor, wenigstens einen Speicher und wenigstens ein Kommunikationsmodul, wobei der wenigstens eine Prozessor dazu eingerichtet ist, ein Verfahren (20) nach einem der Ansprüche 1 bis 12 durchzuführen.

15. Einrichtungsserver (30) nach Anspruch 14, welcher in wenigstens einem Kommunikationsknoten einer Formation umfasst ist oder von den Formationen getrennt ist.


**Revendications**

1. Procédé mis en œuvre par ordinateur (20) pour configurer des valeurs d'un ensemble de paramètres d'au moins deux formations mobiles, chaque formation comprenant une pluralité de nœuds de communication respectifs, dans lequel l'ensemble de paramètres comprend au moins un paramètre précédent, dans lequel chaque paramètre précédent correspond à un paramètre de formation pour chaque formation ou à un paramètre de réseau pour les formations, dans lequel le paramètre de formation d'une formation définit un agencement géométrique des nœuds de communication de la formation et le paramètre réseau d'une formation définit des ressources de communication qui sont attribuées à ladite formation pour l'échange de données sur des liaisons sans fil, dans lequel chaque paramètre précédent a une valeur prédéterminée et une modification prédéterminée d'un environnement de communication des formations est sur le point d'avoir lieu, dans lequel l'ensemble de paramètres comprend en outre, pour chaque formation :

- un paramètre de contrôle d'un algorithme de contrôle utilisé par la formation pour maintenir l'agencement géométrique,
- un paramètre de communication pour configurer les liaisons sans fil entre les nœuds de communication de la formation, lesdites liaisons sans fil étant utilisées pour l'échange de données relatives à l'algorithme de contrôle,

dans lequel ledit procédé de configuration comprend des étapes suivantes :

- pour chaque paramètre précédent : (S20) l'obtention d'une plage de valeurs de performance autorisées sur la base de la valeur de paramètre précédent correspondante, - (S21) la recherche de valeurs des paramètres de contrôle et des paramètres de communication des formations qui permettent d'atteindre une valeur de performance autorisée à l'intérieur de chaque plage lors de la considération que la modification de l'environnement de communication des formations a eu lieu,
- s'il n'est pas possible d'atteindre une valeur de performance autorisée pour chaque plage : (S22) la recherche de plages mises à jour de valeurs de performance autorisées pour lesquelles il est possible de déterminer des valeurs des paramètres de contrôle et des paramètres de communication qui permettent d'atteindre une valeur de performance autorisée pour chaque plage mise à jour lors de la considération que la modification de l'environnement de communication a eu lieu,
- (S23) la détermination d'une valeur mise à jour de l'au moins un paramètre précédent sur la base des valeurs des paramètres de contrôle et des paramètres de communication qui permettent d'atteindre une valeur de performance autorisée pour chaque plage mise à jour de valeurs de performance autorisées.

2. Procédé (20) selon la revendication 1, dans lequel la plage de valeurs de performance autorisées pour un paramètre de formation correspond à une plage de valeurs de performance de contrôle autorisées pour l'algorithme de contrôle utilisé par ladite formation et/ou la plage de valeurs de performance autorisées pour un paramètre de réseau correspond à une plage de valeurs de performance d'utilisation de ressources autorisées pour l'utilisation des ressources de communication attribuées par les formations.

3. Procédé (20) selon la revendication 2, dans lequel l'ensemble de paramètres comprend une pluralité de paramètres précédents qui comportent un paramètre de formation pour chaque formation et au moins un paramètre de réseau pour toutes les formations et, s'il n'est pas possible de trouver des valeurs des paramètres de contrôle et des valeurs des paramètres de communication des formations qui permettent d'atteindre une valeur de performance autorisée pour chaque plage, la recherche de plages mises à jour comprend alors la dégradation des valeurs de performance de contrôle autorisées pour au moins une formation.

4. Procédé (20) selon la revendication 3, dans lequel la recherche de plages mises à jour comprend d'abord la dégradation des valeurs de performance de contrôle autorisées avant de dégrader, si nécessaire, les valeurs de performance d'utilisation de ressources autorisées.

5. Procédé (20) selon la revendication 2, dans lequel l'ensemble de paramètres comprend une pluralité de paramètres précédents qui comportent un paramètre de formation pour chaque formation et au moins un paramètre de réseau pour toutes les formations et, s'il n'est pas possible de trouver des valeurs des paramètres de contrôle et des valeurs des paramètres de communication des formations qui permettent d'atteindre une valeur de performance autorisée pour chaque plage, la recherche de plages mises à jour comprend alors la dégradation des valeurs de performance d'utilisation des ressources autorisées pour les formations.

6. Procédé (20) selon la revendication 5, dans lequel la recherche de plages mises à jour comprend d'abord la dégradation des valeurs de performance d'utilisation de ressources autorisées avant de dégrader, si nécessaire, les valeurs de performance de contrôle autorisées.

7. Procédé (20) selon l'une quelconque des revendications 3, 4 et 6, dans lequel la recherche de plages mises à jour en dégradant les valeurs de performance de contrôle autorisées pour les formations comprend l'utilisation d'un même facteur de dégradation pour la totalité ou une pluralité des formations.

8. Procédé (20) selon l'une quelconque des revendications 2 à 7, dans lequel les valeurs de performance de contrôle autorisées pour un algorithme de contrôle sont représentatives des valeurs de vitesse de convergence autorisées pour ledit algorithme de contrôle.

9. Procédé (20) selon l'une quelconque des revendications 2 à 8, dans lequel les valeurs de performance d'utilisation de ressources autorisées sont représentatives d'un niveau d'interférence global généré par toutes les formations lors de l'utilisation des ressources de communication attribuées.

10. Procédé (20) selon l'une quelconque des revendications précédentes, dans lequel le paramètre de formation de chaque formation est représentatif d'au moins une parmi :

    - une distance entre des nœuds de communication de la formation,
    - une forme de l'agencement géométrique de la formation,
    - une vitesse d'un nœud de communication de la formation.

11. Procédé (20) selon l'une quelconque des revendications précédentes, dans lequel une ressource de communication attribuée, incluse dans un paramètre de réseau, est l'un quelconque parmi :

    - au moins une bande passante de fréquences,
    - au moins un code d'étalement ou de brouillage,
    - au moins un modèle temporel.

12. Procédé (20) selon l'une quelconque des revendications précédentes, réalisé par un serveur de configuration inclus dans au moins un nœud de communication d'une formation ou séparé des formations.

13. Produit-programme informatique comprenant des instructions qui, lorsqu'elles sont exécutées par au moins un processeur, configurent ledit au moins un processeur pour réaliser un procédé (20) selon l'une quelconque des revendications précédentes.

14. Serveur de configuration (30) comprenant au moins un processeur, au moins une mémoire et au moins un module de communication, dans lequel l'au moins un processeur est configuré pour réaliser un procédé (20) selon l'une quelconque des revendications 1 à 12.

15. Serveur de configuration (30) selon la revendication 14, inclus dans au moins un nœud de communication d'une formation ou séparé des formations.

a)

b)

**Fig. 1**

**Fig. 2**

**Fig. 3**

**Fig. 4**

a)

b)

**Fig. 5**

**Fig. 6**

**Fig. 7**

$$\begin{cases} p^i_{form} \longmapsto u^i_{ctrl}, i = 1 \dots N \\ p_{net} \longmapsto c_{com} \end{cases}$$

S20

$$\left(\hat{x}^{i=1:N}_{com}, \hat{x}^{i=1:N}_{ctrl}\right) = \arg \max_{x^{i=1:N}_{ctrl}, x^{i=1:N}_{com} \in \Omega_\uparrow} \left(\bar{f}_\uparrow\left(u^{i=1:N}_{ctrl}, -c_{com}\right)\right)$$

$$\Omega_\uparrow = \left\{ x^{i=1:N}_{ctrl}, x^{i=1:N}_{com} \in \mathbb{X} \,|\, u^i_{ctrl} \geq u^i_{ctrl,t}, i = 1 \dots N, c_{com} \leq c_{com,t} \right\}$$

If some $\left(u^i_{ctrl,t}, c^i_{com,t}\right) i = 1 \dots N$ are not achievable

S21

$$\left(\hat{x}^{i=1:N}_{com}, \hat{x}^{i=1:N}_{ctrl}\right) = \arg \max_{x^{i=1:N}_{ctrl}, x^{i=1:N}_{com} \in \Omega_\downarrow} \left(\tilde{f}_\downarrow\left(u^{i=1:N}_{ctrl}, -c_{com}\right)\right)$$

$$\Omega_\downarrow = \left\{ x^i_{ctrl}, x^i_{com} \in \mathbb{X} \,|\, \tilde{G}_\downarrow\left(x^i_{ctrl}, x^i_{com}\right) \leq 0 \right\}$$

Iterate on $\tilde{G}_\downarrow$ $\tilde{f}_\downarrow$

S22

$$u^i_{ctrl}\left(\hat{x}^i_{com}, \hat{x}^i_{ctrl}\right) \triangleq u^i_{ctrl,a}, i = 1 \dots N$$

$$c_{com}\left(\hat{x}^{i=1:N}_{com}, \hat{x}^{i=1:N}_{ctrl}\right) \triangleq c_{com,a}$$

$$\begin{cases} u^i_{ctrl,a} \longmapsto p^i_{form,a}, i = 1 \dots N \\ c_{com,a} \longmapsto p_{net,a} \end{cases}$$

S23

**Fig. 8**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 112947548 A

- EP 21305452

### Non-patent literature cited in the description

- **YANG QUAN CHEN** ; **ZHONGMIN WANG**. Formation control: a review and a new consideration. *2005 IEEE/RSJ International Conference on Intelligent Robots and Systems*, 2005, 3181-3186
- **M. SYBIS et al.** Communication Aspects of a Modified Cooperative Adaptive Cruise Control Algorithm. *IEEE Transactions on Intelligent Transportation Systems*, December 2019, vol. 20 (12), 4513-4523
- **S. SILVA PEREIRA** ; **A. PAGES-ZAMORA**. Consensus in Correlated Random Wireless Sensor Networks. *IEEE Transactions on Signal Processing*, December 2011, vol. 59 (12), 6279-6284

- **Q. ZHANG** ; **H. LI**. MOEA/D: A Multiobjective Evolutionary Algorithm Based on Decomposition. *IEEE Transactions on Evolutionary Computation*, December 2007, vol. 11 (6), 712-731
- **MANUEL GONZALEZ-MARTIN** ; **MIGUEL SEPULCRE** ; **RAFAEL MOLINA-MASEGOSA** ; **JAVIER GOZALVEZ**. Analytical Models of the Performance of C-V2X Mode 4 Vehicular Communications. *IEEE Transactions on Vehicular Technology*, February 2019, vol. 68 (2)